(19) Europäisches Patentamt / European Patent Office / Office européen des brevets

(11) **EP 2 294 442 B1**

(12) **EUROPÄISCHE PATENTSCHRIFT**

(45) Veröffentlichungstag und Bekanntmachung des Hinweises auf die Patenterteilung:
**23.01.2013 Patentblatt 2013/04**

(21) Anmeldenummer: **09769186.9**

(22) Anmeldetag: **19.06.2009**

(51) Int Cl.:
*G01S 3/808* (2006.01)          *G01S 5/20* (2006.01)
*G01S 11/14* (2006.01)

(86) Internationale Anmeldenummer:
**PCT/EP2009/057655**

(87) Internationale Veröffentlichungsnummer:
**WO 2009/156337 (30.12.2009 Gazette 2009/53)**

(54) **VERFAHREN UND VORRICHTUNG ZUM PASSIVEN BESTIMMEN VON ZIELPARAMETERN**

METHOD AND APPARATUS FOR PASSIVE DETERMINATION OF TARGET PARAMETERS

PROCÉDÉ ET DISPOSITIF DE DÉTERMINATION PASSIVE DE PARAMÈTRES CIBLES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **25.06.2008 DE 102008030053**

(43) Veröffentlichungstag der Anmeldung:
**16.03.2011 Patentblatt 2011/11**

(73) Patentinhaber: **ATLAS Elektronik GmbH**
**28309 Bremen (DE)**

(72) Erfinder:
 • **STEINER, Hans-Joachim**
  **28359 Bremen (DE)**
 • **STEIMEL, Ulrich**
  **28876 Oyten (DE)**

(74) Vertreter: **Wasiljeff, Johannes M.B.**
**Jabbusch Siekmann & Wasiljeff**
**Patentanwälte**
**Otto-Lilienthal-Strasse 25**
**28199 Bremen (DE)**

(56) Entgegenhaltungen:
EP-A2- 1 531 339          DE-A1- 10 129 726
US-A- 5 732 043          US-A1- 2002 097 635
US-B1- 7 020 046

 • BAVENCOFF F ET AL: "Constrained bearings-only target motion analysis via Markov chain Monte Carlo methods" IEEE TRANSACTIONS ON AEROSPACE AND ELECTRONIC SYSTEMS, IEEE SERVICE CENTER, PISCATAWAY, NJ, US, Bd. 42, Nr. 4, 1. Oktober 2006 (2006-10-01), Seiten 1240-1263, XP011201333 ISSN: 0018-9251

**Beschreibung**

Die Erfindung betrifft ein Verfahren zum passiven Bestimmen von Zielparametern durch richtungsselektiven Empfang von Schallwellen der im Oberbegriff von Anspruch 1 genannten Art sowie eine entsprechende Vorrichtung der im Oberbegriff von Anspruch 16 genannten Art.

Um ohne Eigenverrat von einem Trägerfahrzeug, z.B. einem Oberflächenschiff oder U-Boot, Zielparameter, wie Kurs, Geschwindigkeit und Entfernung eines Ziels, z.B. eines Oberflächenschiffs oder U-Boots, zu bestimmen, werden herkömmlicherweise mit einer Sonarempfangsanlage Schallwellen eines von diesem Ziel abgestrahlten Zielgeräuschs empfangen und Peilwinkel zum Ziel gemessen. Aus diesen gemessenen Peilwinkeln wird zusammen mit der Eigenposition des Trägerfahrzeugs eine Position des Ziels mittels Schätzung geschätzt und ein zu dieser geschätzten Position zugehöriger geschätzter Peilwinkel berechnet. Dabei wird vorausgesetzt, dass sich das Ziel gleichförmig, d.h. mit konstantem Kurs und konstanter Geschwindigkeit, bewegt.

Ein nicht rekursives iteratives Rechenverfahren zum Minimieren einer Differenz zwischen gemessenen und geschätzten Peilwinkeln über mehrere Verarbeitungszyklen oder des Quadrats dieser Differenz ist durch ein Verfahren zum Lösen von linearen Gleichungen unter Nebenbedingungen nach der Methode der kleinsten Fehlerquadrate gelöst und in Kapitel 23, Seite 158 bis 173, Linear Least Squares with linear inequality constraints, in dem Buch "Solving least squares problems" von Charles R. Lawson, Richard J. Hansen, Classics, In Applied Mathematics, SIAM, ISBN-0-89871-356-0, 1995 beschrieben. Außerdem gibt es ein Programm LSQLIN.M und LSI.M in der MATLAB optimisation tool box, die den in dem Buch angegebenen Algorithmus numerisch lösen. Mit diesem Rechenverfahren wird bei Unterschreiten einer Fehlergrenze die zugrunde liegende geschätzte Position als Zielposition erkannt, deren Zielparameter dann auch die gesuchten Zielparameter liefern. Sie sind in Abhängigkeit des verwendeten Iterationsverfahrens nach einem vorbestimmten Optimierungskriterium optimiert. Die erhaltenen Zielparameter gehören somit zu einer gemäß diesem Optimierungskriterium optimierten Lösung. Diese Lösung wird während jedem Verarbeitungszyklus der zugrundeliegenden Datenverarbeitung mit jeder neuen Peilwinkelmessung aktualisiert und im Allgemeinen stetig verbessert. Eine Verschlechterung dieser Lösung kann jedoch beispielsweise bei einem Manöver des Ziels eintreten. Bei gleichmäßigen Bedingungen, insbesondere ohne Zielmanöver oder Änderung der Schallausbreitungsbedingungen wird jedoch die optimierte Lösung sich mit zunehmender Beobachtungsdauer immer weiter den tatsächlichen Zielparametern annähern. Derartige Verfahren sind bspw. aus DE 34 46 658 C2, DE 101 29 726 A1 und EP 1 531 339 A2 bekannt. Je nach angewendetem Verfahren und aktuellem Szenarium konvergiert die jeweils als beste Lösung bestimmte Lösung, d.h. die optimierte Lösung, früher oder später gegen die tatsächlich richtige Lösung.

Die bekannten Verfahren haben jedoch den Nachteil, dass immer nur eine Lösung ausgerechnet und dem Bediener der Sonarempfangsanlage angegeben wird. Die angegebene Lösung ist zwar im Sinne des jeweils benutzten Optimierungskriteriums die jeweils beste Lösung. Wie gut diese Lösung jedoch tatsächlich ist, ist dem Bediener nicht bekannt, da ihm Einblicke über den Rechengang zum Ermitteln der optimierten Lösung nicht möglich sind.

Für den Bediener ist es zudem nicht erkennbar, wie wahrscheinlich es ist, dass die optimierte Lösung auch die richtige Lösung ist, d.h. wie zuverlässig die berechnete und angegebene Lösung tatsächlich ist.

Bspw. können Szenarien auftreten, bei denen zumindest in einer frühen Phase der Zieldatenbestimmung noch recht unsicher ist, ob ein Ziel anlaufend oder ablaufend ist. Dies führt dazu, dass bspw. in einem Verarbeitungszyklus ein ablaufender Zielkurs als beste Lösung berechnet wird, während im nächsten Verarbeitungszyklus, wenn eine weitere Peilungsmessung vorliegt, ein anlaufender Kurs als beste Lösung ausgegeben wird. Der Bediener kann somit oftmals nicht erkennen, ob die ihm angegebene beste Lösung zuverlässig ist.

Aus WO2007/113485 A1 ist ein weiteres Verfahren zum passiven Bestimmen einer unbekannten Position eines Objektes mittels einer Vielzahl von Sensoren bekannt, bei dem ein Wert, basierend auf einer relativen Position des Sensors und des Objekts, für die Güte der Schätzung dieser Position ermittelt wird.

Der Erfindung liegt nach alledem das Problem zugrunde, beurteilen zu können, wie zuverlässig die vermeintlich beste Lösung, d.h. die nach einem vorbestimmten Optimierungskriterium optimierte Lösung, ist.

Die Erfindung löst dieses Problem mit einem Verfahren gemäß Anspruch 1 sowie mit einer Vorrichtung gemäß Anspruch 16.

Während jedem Verarbeitungszyklus werden neben dem eingangs beschriebenen herkömmlichen Verfahren zum Ermitteln der nach einem vorbestimmten Optimierungskriterium optimierten Lösung für Zielentfernung, Zielposition, Zielkurs und Zielgeschwindigkeit erfindungsgemäß Zielbahnen für viele mögliche Lösungen für die zu bestimmenden Zielparameter berechnet. Diese Zielbahnen werden jeweils durch angenommene Zielparameter für den Zielkurs und die Zielentfernung bezüglich ihrer Richtung und ihres Anfangs festgelegt. Auf den Zielbahnen liegende angenommene Zielpositionen werden durch die angenommene Zielgeschwindigkeit charakterisiert. Die angenommene Zielentfernung ist dabei eine Entfernung zwischen Messort der Sonarempfangsanlage und angenommener Zielposition am Anfang, am Ende oder innerhalb der angenommenen Zielbahn. Diese Zielbahnen beginnen an einem zu einem ersten gemessenen Peilwinkel zugehörigen ersten Peilstrahl und enden an einem zum zuletzt gemessenen Peilwinkel zugehörigen Peilstrahl. Für jede mögliche Lösung für die Zielparameter wird längs der Zielbahnen ein Qualitätsmaß aus den - den möglichen Zielpositionen zugeordneten - Peilwinkeln und den gemessenen Peilwinkeln berechnet. Das Qualitätsmaß ist für alle zur gleichen Zielbahn gehörenden, angenommenen Zielparameter gleich. Für jeden Zielparameter ergibt sich für die verschiedenen möglichen Lösungen eine andere Verteilung des Qualitätsmaßes, da das Qualitätsmaß für die einzelnen Zielbahnen und damit für die zugehörigen Zielparameter unterschiedlich ist. In diesen zielparameterabhängigen Verteilungen befindet sich auch ein Qualitätsmaß für die aus dem Optimierungsverfahren erhaltene optimierte Lösung der Zielentfernung, des Zielkurses und der Zielgeschwindigkeit. Die Verteilung des Qualitätsmaßes jedes Zielparameters gibt Aufschluss über die Zuverlässigkeit der optimierten Lösung.

Die Verteilung des Qualitätsmaßes in Abhängigkeit der Entfernung zum Ziel weist eine Hüllkurve mit der Form einer Glockenkurve auf. Liegt die Breite der Glockenkurve bei bzw. oberhalb einer vorgegebenen Mindestqualität unterhalb eines vorgegebenen Grenzwerts, so wird die zur optimierten Lösung gehörenden Entfernung zum Ziel als zuverlässig bewertet.

Zeigt die Hüllkurve der Verteilung des Qualitätsmaßes in Abhängigkeit vom Kurs kein ausgeprägtes einzelnes Maximum (da z.B. diese Verteilung aus mehreren nebeneinanderliegenden Glockenkurven besteht), müssen weitere Peilwinkelmessungen zum Ermitteln der optimierten Lösung herangezogen werden. Erst wenn die Hüllkurve der Verteilung des Qualitätsmaßes oberhalb der vorgegebenen Mindestqualität ein einziges Maximum aufweist und eine vorgegebene Breite unterschreitet, so ist die optimierte Lösung zuverlässig.

Der Verlauf der Hüllkurve der Verteilung des Qualitätsmaßes über der möglichen Zielgeschwindigkeit wird im Bereich der optimierten Lösung für diesen Zielparameter ebenfalls überprüft. Eine zuverlässige Lösung ist dann wahrscheinlich, wenn auch dort die Breite der Verteilung bei einer vorgegebenen Mindestqualität einen vorgegebenen Grenzwert unterschreitet.

Der Vorteil des erfindungsgemäßen Verfahrens liegt darin, dass die Verteilung des Qualitätsmaßes über den jeweiligen angenommenen Zielparametern einen Zuverlässigkeitsindikator oder Zuverlässigkeitsgrad liefert und damit Auskunft darüber gibt, ob die optimierte Lösung vertrauenswürdig ist.

Die von der angenommenen Zielgeschwindigkeit je angenommener Zielbahn abhängigen angenommenen Zielpositionen liegen bei allen angenommenen Zielbahnen auf einem angenommenen Peilstrahl zum Messort der Sonarempfangsanlage, der einen zugehörigen Peilwinkel, einen so genannten angenommen Peilwinkel charakterisiert. Diesen angenommenen Zielpositionen ist jeweils auch ein gemessener Peilwinkel zugeordnet, der zu einem Peilstrahl einer tatsächlichen Messung gehört. Dieser Peilstrahl tritt entweder durch die zugeordnete angenommene Zielposition hindurch oder geht abhängig von der Qualität der Schätzung mehr oder weniger dicht an ihr vorbei, d.h. läuft durch einen Bereich um die angenommene Zielposition. Die Differenzen zwischen gemessenen und angenommenen Peilwinkeln werden längs jeder angenommenen Zielbahn zu einem Qualitätsmaß verrechnet, welches eine Aussage darüber zulässt, wie gut die angenommene Zielbahn mit der tatsächlichen Zielbahn übereinstimmt bzw. dieser angenähert ist. Somit entsteht ein Lösungsraum mit einer Vielzahl von möglichen Lösungen, der auch die optimierte Lösung enthält.

Es werden für jeden Zielparameter, d.h. bspw. für Zielkurs, Zielentfernung oder Zielgeschwindigkeit, jeweils gesondert die relativen Lagen der zu den berechneten möglichen Lösungen aufgefundenen Zielparameter untereinander analysiert und aus diesen relativen Lagen zueinander für jeden Zielparameter ein Zuverlässigkeitsindikator ermittelt, wobei jedoch nur solche Lösungen bzw. deren zugehörigen Zielparameter betrachtet werden, deren Qualitätsmaße eine Mindestqualität aufweisen. D.h. schlechte Lösungen werden nicht für die Ermittlung des Zuverlässigkeitsindikators herangezogen. Aus den Zuverlässigkeitsindikatoren der jeweiligen Zielparameter wird dann ein Zuverlässigkeitsgrad abgeleitet. Bspw. wird der Mittelwert der drei Zuverlässigkeitsindikatoren gebildet und als Zuverlässigkeitsgrad ausgegeben. Alternativ werden die Zuverlässigkeitsindikatoren miteinander verglichen und bei starken Abweichungen voneinander wird der Zuverlässigkeitsgrad als gering ausgegeben. Der somit erhaltene Zuverlässigkeitsgrad wird schließlich der optimierten Lösung zugeordnet. Er gibt an, wie zuverlässig die als beste Lösung berechnete Lösung ist.

Bei einer besonderen Ausführungsform werden die angenommenen Zielbahnen nach Art eines Netzes bestimmt. Bei jeder Zielbahn werden ein konstanter Kurs und eine konstante Geschwindigkeit angenommen. Das Netz wird durch einen ersten und einen letzten Peilstrahl begrenzt, wobei der erste Peilstrahl einem ersten gemessenen und ggf. künstlich verrauschten Peilwinkel und einem zuletzt gemessenen und ggf. künstlich verrauschten Peilwinkel zugeordnet sind. Der erste Peilstrahl sowie der letzte Peilstrahl werden automatisch oder manuell durch Bedienereingriff festgelegt. Dabei beginnt jede angenommene Zielbahn auf dem ersten Peilstrahl in einem Anfangspunkt und endet auf dem letzten Peilstrahl in einem Endpunkt, wobei die Anfangspunkte der Zielbahnen auf dem ersten Peilstrahl sowie die Endpunkte der zum gleichen Anfangspunkt gehörenden Zielbahnen auf dem letzten Peilstrahl jeweils in unterschiedlichen Entfernungen zur Sonarempfangsanlage angeordnet sind. Die Feinheit des Netzes wird dabei vorteilhafterweise durch den Abstand der angenommenen Zielanfangs- und Zielendpositionen auf dem ersten und dem letzten Peilstrahl bestimmt. Je feiner das Netz aufgespannt wird, desto genauer kann die Verteilung des Qualitätsmaßes in Abhängigkeit der angenommenen Lösungen berechnet werden. Vorteilhafterweise können der erste und/oder der letzte Peilstrahl bzw. die zugehörigen gemessenen Peilwinkel künstlich verrauscht werden, wodurch sich im statistischen Mittel bessere Annahmen für die Zielbahn erzielen lassen können.

Bevorzugt wird das Qualitätsmaß einer Zielbahn aus der Summe der - vorteilhafterweise gewichteten - Quadrate der Differenzen für die entlang der Zielbahn angenommenen Peilwinkel und der zugeordneten gemessenen Peilwinkel berechnet. Das Qualitätsmaß lässt sich dann mittels folgender Formel angeben:

$$Q(i,j) \;=\; \sum_{k=1}^{n} w_k \cdot \left[ \dot{B}_{meas,k} - B_{est(i,j),k} \right]^2$$

Dabei bezeichnet $Q(i,j)$ das Qualitätsmaß für eine angenommene Zielbahn $Z(i,j)$ mit einer zum Anfangspunkt der Zielbahn gehörenden Anfangsentfernung $Rfirst(i)$ und mit einer Entfernung zum Endpunkt der Zielbahn $Rlast(j)$. Der Index $k$ läuft von 1 bis $n$, wobei $n$ die Anzahl gemessener Peilwinkel $B_{meas,k}$ bzw. angenommener Peilwinkel $B_{est,k}$ längs der Zielbahn angibt. $w_k$ bezeichnet Gewichtsfaktoren, welche bspw. der bei einer Vorfilterung ermittelten inversen Standardabweichung der gemessenen Peilwinkel $B_{meas,k}$ entsprechen. $B_{est(i,j),k}$ bezeichnet den angenommenen Peilwinkel des $k$-ten Peilstrahls für die Zielbahn $Z(i,j)$.

Bei einer weiteren bevorzugten Ausführungsform wird das Qualitätsmaß aus der invertierten Summe der - vorteilhafterweise gewichteten - Quadrate der Differenzen aus gemessenen Peilwinkeln und angenommenen Peilwinkeln berechnet, die mit der kleinsten dieser Summen aller angenommenen Zielbahnen multipliziert wird. D.h. dass statt der Werte $Q(i,j)$ gemäß der o.g. Formel die inversen und auf das Intervall zwischen 0 und 1, d.h. auf [0,1] normierten Qualitätsmaße verwendet werden. D.h. $Q(i,j)$ wird ersetzt durch $Qinv(i,j) = min(Q)/Q(i,j)$.

Dabei liegt die optimierte Lösung mit dem größten Zuverlässigkeitsgrad dort, wo die o.g. Summe $Q(i,j)$ minimal bzw. die invertierte mit der kleinsten der Summen aller angenommenen Zielbahnen multiplizierte Summe, d.h. $Qinv(i,j) = 1$ ist.

Bevorzugt wird eine mögliche Lösung als angenommene Lösungen ausgeschlossen und findet keinen Eingang in den Lösungsraum, wenn die zugeordnete Zielbahn nicht alle zu den gemessenen und/oder angenommenen Peilwinkeln gehörenden Peilstrahlen schneidet. Eine derartige Lösung ist unwahrscheinlich und braucht daher nicht weiter betrachtet zu werden.

Bevorzugt werden ferner Lösungen aus dem Lösungsraum ausgeschlossen, wenn sie außerhalb einer oder mehrerer vorgegebener Randbedingungen liegen. Eine derartige Randbedingung kann bspw. eine maximale Zielgeschwindigkeit sein. Es kann nämlich oftmals angenommen werden, dass ein Wasserfahrzeug eine bestimmte Geschwindigkeit aus technischen Gründen nicht überschreiten kann.

Eine weitere Randbedingung kann eine minimale Zielgeschwindigkeit sein. Bspw. kann man nämlich davon ausgehen, dass ein Frachter nicht mit einer Geschwindigkeit unter einem Knoten fährt.

Eine weitere Randbedingung kann bspw. eine maximale oder minimale Zielentfernung sein, die sich bspw. aus der Reichweite der verwendeten Sonarempfangsanlage und der ihr zugeordneten Signalverarbeitung ergibt.

Ferner kann als Randbedingung ein maximaler und/oder ein minimaler Lagewinkel verwendet werden. Dabei bezeichnet der Begriff Lagewinkel die Differenz zwischen Zielkurs und Zielpeilung. Der Lagewinkel gibt somit einen zur Eigenposition, d.h. zur Position der beobachtenden Sonarempfangsanlage, relativen Fahrtwinkel bzw. relativen Winkel eines Bewegungsvektors des Ziels an. Ein Lagewinkel von 0° bedeutet somit, dass ein Ziel direkt auf die Eigenposition zufährt. Demgegenüber bedeutet ein Lagewinkel von 180°, dass ein Ziel in entgegengesetzter Richtung von der Eigenposition wegfährt.

Bei einer besonderen Ausführungsform wird der Zuverlässigkeitsgrad der optimierten Lösung als "hoch" eingestuft, wenn alle jeweiligen Zielparameter derjenigen Lösungen mit einem Qualitätsmaß, welches eine Mindestqualität anzeigt, innerhalb einer vorbestimmten Bandbreite liegen. Vorteilhafterweise ist diese Bandbreite um den Mittelwert des jeweiligen Zielparameters dieser Lösungen vorgesehen.

Vorteilhafterweise ist diese Bandbreite um den jeweiligen Mittelwert des jeweiligen Zielparameters dieser Lösungen vorgesehen. Liegt der Zielparameter der optimierten Lösung innerhalb dieser Bandbreite, weist diese Lösung einen hohen Zuverlässigkeitsgrad auf.

Bei einer weiteren Ausführungsform wird für jeden Zielparametertyp, d.h. bspw. für die Zielentfernung, den Zielkurs und die Zielgeschwindigkeit, jeweils ein Zuverlässigkeitsindikator aus der ggf. normierten Summe der, insbesondere quadrierten, Beträge der Differenzen zwischen einem zu einer der Lösungen gehörenden Zielparameter und dem Mittelwert der Zielparameter bzgl. der Lösungen mit einem eine Mindestqualität anzeigenden Qualitätsmaß ermittelt. Dieser Zuverlässigkeitsindikator basiert somit im Wesentlichen auf der Standardabweichung bzw. Varianz der Zielparameter des zugehörigen Zielparametertyps. Je höher die Standardabweichung bzw. Varianz ist, desto geringer ist die Zuverlässigkeit der optimierten Lösung einzustufen.

Vorteilhafterweise wird die vorstehend genannte Differenz zwischen gemessenen und angenommenen Peilwinkeln gewichtet. Als Gewichtungsfaktor kann das inverse Qualitätsmaß oder das Quadrat oder eine andere Potenz des inversen Qualitätsmaßes verwendet werden. Somit erhalten Lösungen mit einem geringen inversen Qualitätsmaß eine geringere Gewichtung bei der Ermittlung des Zuverlässigkeitsindikators. Umgekehrt werden Lösungen mit einem hohen Qualitätsmaß stärker gewichtet.

De Zuverlässigkeitsgrad wird vorteilhafterweise aus dem schlechtesten Zuverlässigkeitsindikator oder bspw. aus dem Mittelwert der zuvor normierten Zuverlässigkeitsindikatoren der verschiedenen Zielparametertypen ermittelt.

Bei einer besonders bevorzugten Ausführungsform werden während jedem Verarbeitungszyklus die Zielparameter der Lösungen mit einem eine Mindestqualität anzeigendem Qualitätsmaß mittels eines oder mehrerer zweidimensionaler Diagramme des Qualitätsmaßes über dem angenommenen Zielkurs, der angenommenen Zielentfernung und/oder der angenommene Zielgeschwindigkeit, insbesondere grafisch visualisiert, auf einer Anzeigevorrichtung dargestellt. Eine derartige Visualisierung erlaubt ein genaues Ablesen der Zielparameter zu einem ausgewählten Qualitätsmaß. Insbesondere erlaubt die Darstellung derartiger zweidimensionaler Diagramme für alle relevanten Zielparameter eine Visualisierung der zu einer Lösung gehörenden Zielparameter innerhalb dieser Diagramme. Ein Bediener wählt dabei bspw. einen konkreten Wert eines Zielparameters mit einem bestimmten Qualitätsmaß innerhalb eines der Diagramme aus und erhält dann durch eine besondere Kennzeichnung die zu der ausgewählten Lösung gehörenden anderen Zielparameter mit demselben Qualitätsmaß. Bspw. werden dann alle zu einer Lösung gehörenden Zielparameter in einer bestimmten Farbe dargestellt, welche von der Darstellungsfarbe der übrigen Zielparameter abweicht. Auf diese Weise kann der Bediener unmittelbar erkennen, ob eine Lösung wahrscheinlich ist oder nicht. Bspw. kann der Bediener erkennen, dass ein bestimmter Zielkurs nur bei einer sehr kleinen Zielgeschwindigkeit möglich ist und daher trotz eines evtl. hohen Qualitätsmaßes sehr unwahrscheinlich ist (da bspw. bestimmte Schiffstypen mit einer Mindestgeschwindigkeit fahren).

Vorteilhafterweise wird der gesamte Lösungsraum, d.h. alle zu angenommenen Zielbahnen gehörenden Lösungen - ggf. nach Ausschluss unmöglicher oder unwahrscheinlicher Lösungen - auf einer Anzeigevorrichtung derart dargestellt, dass das jeweilige Qualitätsmaß der Vielzahl von Lösungen nämlich für alle angenommenen Zielbahnen in Abhängigkeit eines oder mehrerer Zielparameter grafisch visualisiert wird. D.h. das Qualitätsmaß wird jeweils über alle angenommenen Zielkurse, Zielentfernungen und/oder Zielgeschwindigkeiten aufgetragen. Es entstehen somit Grafiken, die für jede angenommene Lösung oder jede Zielbahn das zugehörige Qualitätsmaß veranschaulichen. Der Bediener kann somit auf einen Blick erkennen, ob die als optimierte Lösung berechnete Lösung ein Qualitätsmaß aufweist, das in einem breiten Bereich eines Zielparameters über der Mindestqualität liegt bzw. ein breites Maximum mit geringer positiver und negativer Steigung bis zum Maximalwert aufweist. In diesem Fall kann der Bediener davon ausgehen, dass es viele Lösungen mit annähernd gleicher Qualität gibt, welche jedoch signifikant unterschiedliche Werte des jeweiligen Zielparameters aufweisen, und die in diesem Bereich liegende optimierte Lösung nicht zuverlässig ist.

Ferner kann der Bediener auch schnell erkennen, ob mehrere schmale Bereiche von möglichen Lösungen mit einem hohen Qualitätsmaß existieren. Dies ist bspw. der Fall, wenn aufgrund zu weniger Messdaten noch unklar ist, ob ein Ziel anläuft oder abläuft. In diesem Fall gibt es für den Zielkurs regelmäßig zwei Bereiche mit Lösungen mit annähernd gleichem Qualitätsmaß. Der Bediener kann somit anhand des über alle Lösungen visualisierten Qualitätsmaßes schnell erkennen, ob die optimierte Lösung wahrscheinlich ist oder ob Lösungen ähnlicher Qualität zu möglicherweise ganz anderen Zielparametern führen.

Durch die Ermittlung eines aus einer Vielzahl möglicher Lösungen bestimmten Lösungsraums während jedem Verarbeitungszyklus und die Visualisierung dieses Lösungsraumes während jedem Verarbeitungszyklus kann der Bediener auf einen Blick erkennen, wo potentiell mögliche Lösungen liegen können. Er kann somit die Zuverlässigkeit einer Lösung rasch und unkompliziert abschätzen.

Vorzugsweise erfolgt die Visualisierung des Qualitätsmaßes auf einer gesonderten Anzeige, so dass der Bediener weiterhin die gewohnte Lagedarstellung beobachten kann, sich jedoch für ein Ziel den Lösungsraum visualisieren lassen kann, um die Zuverlässigkeit der als beste Lösung bestimmten Lösung abschätzen zu können. Bei einer weiteren besonderen Ausführungsform werden während jedem Verarbeitungszyklus die Zielparameter der Lösungen mit einem eine Mindestqualität anzeigendem Qualitätsmaß mittels eines oder mehrerer dreidimensionaler Diagramme des Qualitätsmaßes über a) den angenommenen Zielkurs und die angenommene Zielentfernung, b) den angenommenen Zielkurs und die angenommene Zielgeschwindigkeit, c) die angenommene Zielentfernung und die angenommene Zielgeschwindigkeit und/oder d) die angenommene Zielentfernung, den angenommenen Zielkurs und die angenommene Zielgeschwindigkeit, insbesondere grafisch visualisiert, auf einer Anzeigevorrichtung dargestellt. Die Verwendung dreidimensionaler Diagramme ist vorteilhaft, um einen ersten groben Überblick über die zu den Lösungen gehörenden Qualitätsmaße zu erhalten. Vorteilhafterweise wird dabei der Wert des Qualitätsmaßes farblich codiert visualisiert.

Vorteilhafterweise ist bei der Verwendung von dreidimensionalen Diagrammen der Betrachtungswinkel auf das jeweilige Diagramm vom Bediener veränderbar. Somit können Strukturen im Lösungsraum bzw. im Verlauf des Qualitätsmaßes deutlicher visualisiert werden.

Bei einer weiteren bevorzugten Ausführungsform werden während jedem Verarbeitungszyklus die Zielparameter der Lösungen mit einem eine Mindestqualität anzeigendem Qualitätsmaß mittels wenigstens vier zweidimensionaler Diagramme des Qualitätsmaßes, insbesondere grafisch visualisiert, auf einer Anzeigevorrichtung dargestellt, wobei das Qualitätsmaß jeweils über zwei Zielparameter aufgetragen wird. Dabei wird der Wert des Qualitätsmaßes vorzugsweise farblich und/oder durch die Größe von Symbolen codiert. Vorteilhafterweise sind diese vier Diagramme in zwei Reihen und zwei Spalten angeordnet, so dass jeweils zwei Diagramme seitlich nebeneinander liegen. Dabei gilt für jeden von drei Zielparametern: In einem ersten Diagramm ist der jeweilige Zielparameter auf einer ersten Achse, d.h. entweder auf der Hochachse oder der Querachse des Diagramms, über einen ersten der beiden anderen Zielparameter aufgetragen und in einem zum ersten Diagramm seitlich benachbarten zweiten Diagramm ist derselbe Zielparameter auf derselben Achse über den zweiten der beiden anderen Zielparameter aufgetragen, wobei die beiden anderen Zielparameter jeweils auf einer anderen, zur ersten Achse senkrechten Achse aufgetragen sind. Diese Art der Visualisierung erlaubt dem Bediener, schnell zu erkennen, welche Zielparameter zusammen gehören. Dies erleichtert dem Bediener die Abschätzung, wie wahrscheinlich eine Lösung ist.

Bei einer weiteren bevorzugten Ausführungsform werden bei einer automatischen oder manuellen Auswahl einer Lösung die zugehörigen angenommenen bzw. geschätzten Zielparameter in dem bzw. den Diagrammen markiert. Somit erkennt der Bediener auf einen Blick, welche der Zielparameter zu einer gemeinsamen Lösung gehören.

Bei einer weiteren vorteilhaften Ausführungsform wird bei Auswahl einer Lösung ein zu dieser Lösung gehörendes Diagramm der Peilwinkeldifferenzen zwischen dem jeweils gemessenen und dem jeweils zugehörigen angenommenen bzw. geschätzten Peilwinkel auf einer Anzeigevorrichtung dargestellt. Diese Darstellung stellt dem Bediener weitere Informationen über die Qualität und Wahrscheinlichkeit einer Lösung zur Verfügung. So kann er bspw. Ausreißer-Peilungen erkennen und diese von der weitere Berechnung ausschließen.

Bei einer weiteren vorteilhaften Ausführungsform wird das visualisierte Qualitätsmaß derart eingefärbt, dass das Qualitätsmaß in mehrere vorbestimmte Wertebereiche unterteilt und jedem Wertebereich ein anderer Farbton zugeordnet wird. Dabei wird ein Qualitätsmaß mit einem Wert innerhalb eines dieser Wertebereiche mit dem zugeordneten Farbton dargestellt. Somit können dem Bediener für verschiedene Zielparameter potentielle Lösungsgebiete visuell deutlich gemacht werden. D.h. der Bediener kann anhand der Einfärbung Lösungsgebiete mit einer hohen, mittleren oder geringen Wahrscheinlichkeit schnell unterscheiden.

Bei einer weiteren bevorzugten Ausführungsform wird für jeden Zielparameter ein Erwartungsgebiet berechnet, für das das Qualitätsmaß eine Mindestqualität erreicht. Vorteilhafterweise wird ein derartiges Erwartungsgebiet im entsprechenden Diagramm kenntlich gemacht. Dies kann bspw. durch Einfärbung oder Markierung des Erwartungsgebietes erfolgen. Der Bediener erkennt auf diese Weise sehr schnell Gebiete möglicher hochqualitativer Lösungen.

Bei einer weiteren vorteilhaften Ausführungsform werden mittels mehrerer Anordnungen von Wasserschallaufnehmern, insbesondere mehrerer unterschiedlicher Sensoren bzw. Antennen, wie bspw. einer Schleppantenne und einer am Eigenboot angeordneten Antenne, z.B. einer Seitenantenne oder einer Zylinderbasis, Schallwellen empfangen, um somit von unterschiedlichen Messorten Peilwinkel zu einem Ziel zu messen. Auf diese Weise erhält man mehrere Peilwinkel zu einem Ziel und kann nach Art einer Kreuzpeilung mittels dieser unterschiedlichen Peilwinkel von unterschiedlichen Messorten eine Zielposition grob abschätzen. Mittels dieser Abschätzung kann ein möglicher Lösungsraum für die möglichen Lösungen der zu bestimmenden Zielparameter eingeschränkt werden. Vorteilhafterweise kann somit der Lösungsraum verkleinert werden. Ferner hat die optimierte Lösung auch einen höheren Zuverlässigkeitsgrad.

Bei einer weiteren vorteilhaften Ausführungsform werden die Frequenzen der von einem Ziel abgestrahlten Schallwellen bzw. der aus einem gemessenen Peilwinkel einfallenden Schallwellen gemessen und diese gemessenen Frequenzen zur Abschätzung der Zielposition verwendet. Durch die Verwendung der zusätzlichen Frequenzmessungen kann ebenfalls der Lösungsraum für die möglichen Lösungen der zu bestimmenden Zielparameter eingeschränkt werden. Vorteilhafterweise ergibt sich dabei auch ein höherer Zuverlässigkeitsgrad der optimierten Lösung.

Weitere bevorzugte Ausführungsformen ergeben sich aus den Unteransprüchen sowie aus den anhand der beigefügten Zeichnung näher erläuterten Ausführungsbeispielen gemäß der Erfindung. In der Zeichnung zeigen:

Fig. 1    zwei Peilstrahlen in einer Ansicht von oben,

Fig. 2    ein Szenarium mit einer Vielzahl von Peilstrahlen von einem Trägerfahrzeug zu einem Ziel in einer Ansicht von oben,

Fig. 3    ein Netz von Zielbahnen, welche von einem ersten Peilstrahl zu einem letzten Peilstrahl verlaufen, in einer Ansicht von oben,

Fig. 4    ein Szenarium in einer Ansicht von oben zur Erläuterung unmöglicher Zielbahnen,

Fig. 5    ein weiteres Szenarium in einer Ansicht von oben mit Peilstrahlen von einem Trägerfahrzeug zu einem Ziel,

Fig. 6    drei zweidimensionale Diagramme zur Veranschaulichung des Qualitätsmaßes über drei Zielparameter, nämlich die Zielentfernung, den Zielkurs und die Zielgeschwindigkeit für das Szenarium gemäß Fig. 5 zu einem ersten Verarbeitungszeitpunkt,

Fig. 7    die Diagramme aus Fig. 6 zu einem zweiten, späteren Verarbeitungszeitpunkt,

Fig. 8    die Diagramme aus Fig. 6 zu einem dritten, noch späteren Verarbeitungszeitpunkt,

Fig. 9    ein weiteres Diagramm zur Visualisierung des Qualitätsmaßes über die Zielgeschwindigkeit und die Zielentfernung,

Fig. 10   vier zweidimensionale Diagramme zur Veranschaulichung des Qualitätsmaßes jeweils über zwei Zielparameter,

Fig. 11    ein dreidimensionales Diagramm zur Visualisierung des Qualitätsmaßes über drei Zielparameter, nämlich Zielkurs, Zielentfernung und Zielgeschwindigkeit,

Fig. 12    das Diagramm aus Fig. 11 unter einem anderen Betrachtungswinkel,

Fig. 13    ein dreidimensionales Diagramm des Qualitätsmaßes über den angenommenen Zielkurs und die angenommene Zielentfernung,

Fig. 14    ein dreidimensionales Diagramm des Qualitätsmaßes über die angenommene Zielentfernung den angenommenen Zielkurs,

Fig. 15    ein Diagramm zur Veranschaulichung von Peilwinkeldifferenzen entlang einer Zielbahn einer ausgewählten Lösung und

Fig. 16    ein Blockdiagramm zur Veranschaulichung eines Verfahrens sowie einer Vorrichtung zur Visualisierung von Zielparametern gemäß einem Ausführungsbeispiel der Erfindung.

An Bord eines Wasserfahrzeugs, insbesondere eines U-Bootes, befinden sich mehrere Anordnungen von Wasserschallaufnehmern, insbesondere elektroakustischen Wandlern. Eine erste derartige Wandleranordnung ist bspw. als Zylinderbasis im Bug des Wasserfahrzeugs angeordnet. Eine zweite Anordnung von Wasserschallaufnehmern ist bspw. als sog. Linearantenne auf einer Seite, bspw. der Steuerbordseite, des Wasserfahrzeugs angeordnet. Eine Anordnung gleicher Bauart befindet sich auf der gegenüberliegenden Seite, d.h. der Backbordseite. Eine weitere Anordnung von Wasserschallaufnehmern kann als Schleppantenne hinter dem Wasserfahrzeug hergeschleppt werden.

Empfangssignale dieser Anordnungen werden in einer Sonarempfangsanlage zu Gruppensignalen benachbarter Richtcharakteristiken in einem Richtungsbildner zusammengefasst, die richtungsselektiv entsprechend den Hauptempfangsrichtungen der Richtcharakteristiken Schall empfangen. Bei einer Zylinderbasis weisen die Hauptempfangsrichtungen senkrecht zur jeweils um einen Wandler versetzte Sehnen eines mit Wandlern besetzten Kreisbogens der Zylinderbasis, indem die Empfangssignale der Wasserschallaufnehmer entsprechend ihrem Abstand vom Kreisbogen zu Sehnen laufzeit- oder phasenverzögert werden und zu Gruppensignalen aufaddiert werden.

Die Empfangssignale einer Seitenantenne werden in ähnlicher Weise verarbeitet. Sie werden dazu ebenfalls in einem Richtungsbildner entsprechend unterschiedlichen virtuellen Schwenkungen der Seitenantenne verzögert und zu Gruppensignalen aufaddiert, so dass ein Fächer von Richtcharakteristiken aufgespannt wird, deren benachbarte Hauptempfangsrichtungen einen Sektor seitlich zum Wasserfahrzeug abdecken.

In entsprechender Weise werden Signale einer Schleppantenne verarbeitet.

Den Gruppensignalen sind in Abhängigkeit von den jeweiligen Zeitverzögerungen Peilwinkel zugeordnet. Intensitätswerten, insbesondere Pegel, der Gruppensignale werden in Zuordnung zum Peilwinkel ermittelt. Sodann wird ein aus den ermittelten Intensitätswerten, insbesondere Pegeln, resultierender Intensitätsverlauf, insbesondere Pegelverlauf, über dem Peilwinkel erstellt und lokale Maxima im Intensitätsverlauf, insbesondere lokale Pegelmaxima im Pegelverlauf, ermittelt. Schließlich werden die den lokalen Maxima zugeordneten Peilwinkel bestimmt und Zielen zugeordnet. Sie ergeben die eingangs genannten gemessenen Peilwinkel zu Zielen.

Eine derartige Sonarempfangsanlage weist ferner ein Schätzfilter zum Bestimmen von Zielparametern aus gemessenen Peilwinkeln zu einem Ziel auf. Die Peilwinkel werden vorzugsweise bei konstanter Fahrt des Wasserfahrzeugs längs eines sog. Eigenlegs zum Ziel gemessen, während sich das Ziel mit konstanter Geschwindigkeit auf einem Zielkurs von einer ersten Zielposition bis zu einer zweiten Zielposition bewegt.

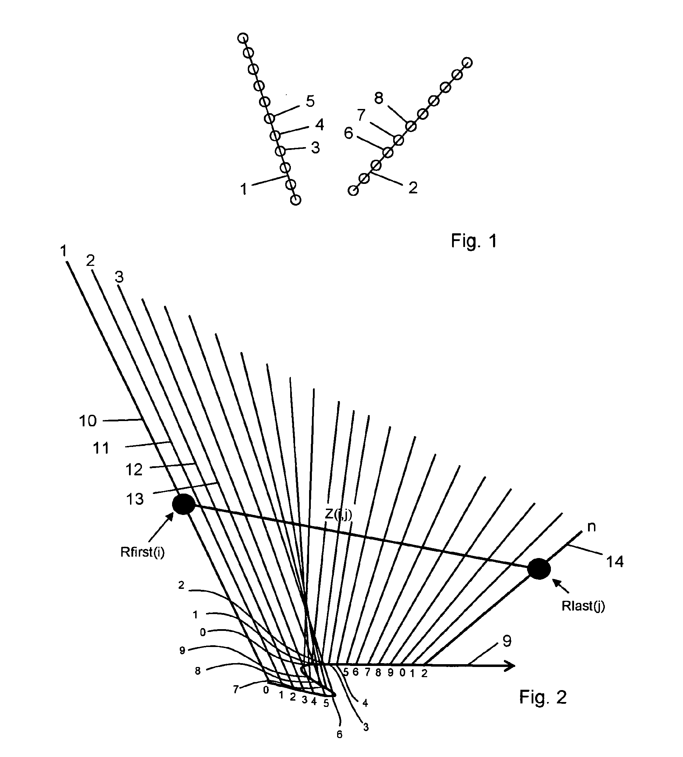

Fig. 1 zeigt zwei Peilstrahlen unter denen ein Ziel zu zwei unterschiedlichen Zeitpunkten gepeilt worden ist. Ein erster Peilstrahl 1 gehört zu einer Anfangspeilung, während ein weiterer Peilstrahl 2 zu einer Endpeilung zu einem späteren Zeitpunkt gehört. Zunächst sei angenommen, dass die Zielentfernung nicht bekannt sei. Das Ziel kann sich somit in verschiedenen Positionen 3, 4, 5 auf dem Peilstrahl 1 sowie ebenso in verschiedenen Positionen 6, 7, 8 auf dem Peilstrahl 2 befunden haben. Zu jeder Position gehört eine entsprechende Zielentfernung. Da diese Zielentfernungen jedoch zunächst nicht bekannt sind, kann sich das Ziel bspw. von der Position 3 zur Position 6, 7 oder 8 bewegt haben. Ebenso kann sich das Ziel von der Position 4 zur Position 6, 7 oder 8 bewegt haben. In gleicher Weise könnte sich das Ziel jedoch auch von der Position 5 zur Position 6, 7 oder 8 bewegt haben.

Zur Bestimmung der Zielparameter wird nun wie folgt vorgegangen:

Es werden N-Positionen 3, 4, 5 auf dem ersten Peilstrahl 1 sowie M-Positionen 6, 7, 8 auf dem letzten Peilstrahl 2 gewählt.

Sodann wird eine Zielbahn ausgewählt, welche eine der Positionen 3, 4, 5 auf dem ersten Peilstrahl 1 mit einer der Positionen 6, 7, 8 auf dem letzten Peilstrahl 2 verbindet. Diese Zielbahn wird als $Z(i, j)$ bezeichnet, wobei der Index $i$ die Position i auf dem ersten Peilstrahl 1 und der Index $j$ die Position auf dem letzten Peilstrahl 2 bezeichnet.

Fig. 2 veranschaulicht die Situation, bei der ein Wasserfahrzeug (Eigenboot) mit einer beobachtenden Sonarempfangsanlage längs einer Bewegungsbahn 9 fährt und $n$ Peilungen zu einem Ziel aufnimmt, das sich von einem ersten Peilstrahl 10 über Peilstrahlen 11, 12, 13 usw. zum $n$-ten Peilstrahl 14 längs der Zielbahn $Z(i, j)$ bewegt. Dabei sind der Kurs sowie die Geschwindigkeit des Ziels konstant.

Die Zielentfernung ändert sich jedoch. Auf dem ersten Peilstrahl 10 beträgt die Zielentfernung für die Zielbahn *Z(i, j) Rfirst(i).* Auf dem letzten Peilstrahl 14 beträgt die Zielentfernung *Rlast(j).*

Die Zielbahn *Z(i, j)* ist jedoch lediglich eine angenommene Zielbahn und muss daher nicht mit der tatsächlichen Zielbahn übereinstimmen.

Für jede mögliche Zielbahn *Z(i, j)* werden die Anfangszielentfernung, der Zielkurs *C(i, j)* sowie die Zielgeschwindigkeit *V(i, j)* berechnet. Statt der Anfangszielentfernung kann jedoch auch die Zielentfernung *Rlast(j)* auf dem letzten Peilstrahl 14 oder eine Zielentfernung innerhalb der angenommenen Zielbahn *Z(i, j)* gewählt werden.

Zu jeder Zielbahn wird ferner ein Qualitätsmaß *Q(i, j)* aus *n* Residuen, d.h. den Winkeldifferenzen zwischen einem gemessenen Peilwinkel und einem korrespondierenden angenommenen Peilwinkel berechnet und zwar vorzugsweise gemäß der Formel

$$Q(i,j) \;=\; \sum_{k=1}^{n} w_k \cdot \left[ B_{meas,k} - B_{est(i,j),k} \right]^2$$

Dabei bezeichnet *Q(i, j)* das Qualitätsmaß für eine angenommene Zielbahn *Z(i, j)* mit einer zum Anfangspunkt der Zielbahn gehörenden Anfangsentfernung *Rfirst(i)* und mit einer Entfernung zum Endpunkt der Zielbahn *Rlast(j).* Der Index *k* läuft dabei von 1 bis *n*, wobei *n* die Anzahl der Peilwinkel längs der Zielbahn angibt. $w_k$ bezeichnet Gewichtsfaktoren, um letztlich die gemessenen Peilwinkel $B_{meas,k}$ entsprechend ihrer Genauigkeit bzw. Abweichung von einem Mittelwert zu gewichten. Als Gewichtsfaktor $w_k$ wird bspw. die bei einer Vorfilterung ermittelte inverse Standardabweichung der gemessenen Peilwinkel $B_{meas,k}$ herangezogen. $B_{est(i,j),k}$ bezeichnet den angenommenen Peilwinkel des *k*-ten Peilstrahls für die Zielbahn *Z(i, j)*, der mit einem gemessenen Peilwinkel $B_{meas,k}$ korrespondiert.

In das Qualitätsmaß fließen somit die Differenzen zwischen den gemessenen Peilwinkeln $B_{meas,k}$ und den zur Zielbahn Z(i, j) gehörenden angenommenen Peilwinkeln $B_{est(i,j),k}$ ein, welche quadriert und mit einem Gewichtsfaktor $w_k$ multipliziert aufsummiert werden.

In das Qualitätsmaß können neben der o.g. Summe weitere Daten einfließen. Insbesondere kann ein zusätzlicher Summand in das Qualitätsmaß einfließen, der wie folgt angegeben wird:

$$\sum_{k=1}^{n} w_k \cdot \left[ f_{meas,k} - f_{est(i,j),k} \right]^2$$

Hierbei bezeichnet $f_{meas,k}$ die gemessene (Doppler-verschobene) Frequenz des Zielgeräuschs und $f_{est(i,j),k}$ die angenommene Frequenz des Zielgeräuschs des *k*-ten Peilstrahls für die Zielbahn *Z(i, ,j).*

Die angenommene Empfangsfrequenz des Zielgeräusches $f_{est(i,j),k}$ berechnet sich dabei wie folgt:

$$f_{est(i,j),k} = fs_{est} \cdot (c + VE_{rad,k}) / (c + V_{rad(i,j),k})$$

wobei

$VE_{rad,k}$ die Radialkomponente der Eigengeschwindigkeit zum Zeitpunkt *k* ist, berechnet aus der Eigengeschwindigkeit, dem Eigenkurs und der gemessenen Peilung zum Zeitpunkt k; $V_{rad(i,j),k}$ die Radialkomponente der Zielgeschwindigkeit zum Zeitpunkt *k* ist, berechnet aus der angenommenen Zielgeschwindigkeit *V(i,j)*, dem angenommenen Zielkurs *C(i,j)* und der ange-nommenen Zielpeilung $B_{est(i,j),k}$ zum Zeitpunkt k;

$fs_{est}$ die geschätzte Sendefrequenz des vom Ziel abgestrahlten Geräusches ist, diese berechnet sich als Mittelwert der n Einzelschätzwerte $fs_{est,k}$

$$fs_{est,k} = f_{meas,k} \cdot (c + V_{rad(i,j),k}) / (c + VE_{rad,k}); k = 1,..,n$$

und *c* die Schallgeschwindigkeit im Wasser ist.

Ein Algorithmus zum Bestimmen von Zielparametern bspw. gemäß DE 101 29 726 A1 oder EP 1 531 339 A2 verwendet inhärent als Optimierungskriterium ein derartiges Qualitätsmaß. Der Algorithmus wählt als beste Lösung diejenige Zielbahn aus, für die sich ein zumindest lokales oder globales Minimum des Qualitätsmaßes *Q(i, j)* ergibt - ohne dass herkömmlicherweise jedoch ein derartiges Qualitätsmaß im Einzelnen berechnet und dem Bediener ausgegeben wird.

Erfindungsgemäß wird jedoch zu jeder Zielbahn *Z(i, j)* ein Qualitätsmaß berechnet, das angibt, mit welcher Qualität die Zielbahn *Z(i, j)* als mögliche Lösung für die gesuchte Zielbahn in Frage kommt.

Die vorstehend genannte Berechnung von Zielparametem, nämlich Zielentfernung, Zielgeschwindigkeit und Zielkurs, sowie des dazugehörigen Qualitätsmaßes wird für alle möglichen, zumindest aber für eine Vielzahl von Zielbahnen *Z(i, j)* durchgeführt.

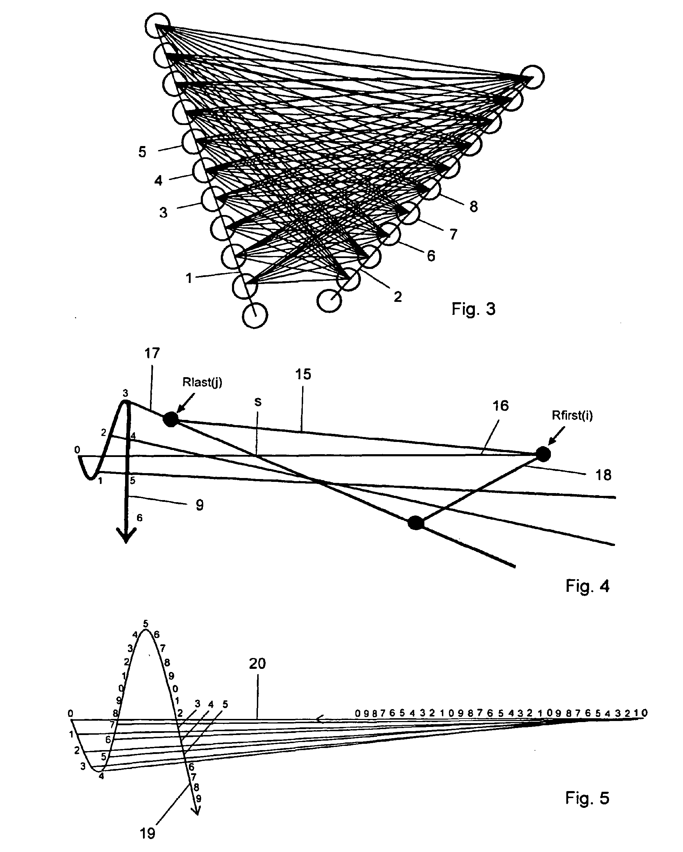

Fig. 3 zeigt schematisch alle möglichen Zielbahnen *Z(i, j)* für die in Fig. 1 gezeigte Situation. Man erhält somit für alle angenommenen Anfangszielentfernungen *R0(i) = Rfirst(i)* und alle angenommenen Endzielentfernungen *Rn(j) =Rlast(j)* alle möglichen Zielkurse *C(i, j) und* alle möglichen Zielgeschwindigkeiten *V(i, j)* mit den zugehörigen Qualitätsmaßen *Q(i, j)*.

Wählt man auf dem ersten Peilstrahl 1 eine Anzahl *N* möglicher Anfangspositionen und auf dem letzten Peilstrahl 2 eine Anzahl *M* möglicher Endpositionen ergeben sich *N* x *M* mögliche Zielbahnen und folglich *N* x *M* mögliche Lösungen, welche einen Lösungsraum bestimmen. Die räumliche Auflösung des Lösungsraums wird durch den Abstand der möglichen Anfangspositionen bzw. der möglichen Endpositionen bestimmt.

In einem nächsten Schritt werden Zielbahnen eliminiert, die zu unmöglichen Lösungen gehören.

Fig. 4 veranschaulicht eine unmögliche Lösung, die zu einer angenommenen Zielbahn 15 gehört. Bezeichnet S den Schnittpunkt des ersten Peilstrahl 16 mit dem letzten betrachteten Peilstrahl 17 (jeweils ausgehend von der Bewegungsbahn 9 des Eigenboots), so kommen als mögliche Zielbahnen nur solche in Betracht, die Positionen rechts vom Schnittpunkt S auf dem Peilstrahl 16 mit Positionen rechts vom Schnittpunkt S auf dem Peilstrahl 17 verbinden. Eine derartige mögliche Lösung ist als Zielbahn 18 dargestellt.

Ferner können solche Zielbahnen ausgeschlossen werden, deren zugehörige Zielgeschwindigkeit größer als eine maximal vorgebbare Geschwindigkeit ist, weil derartige Zielbahnen ebenfalls unmöglich oder unwahrscheinlich sind. Ferner können Zielbahnen ausgeschlossen werden, deren zugehörige Zielgeschwindigkeit sehr langsam ist, wenn bspw. aufgrund eines speziellen Schraubengeräusches auf eine Geschwindigkeit geschlossen werden kann.

Der Lösungsraum kann somit durch Ausschluss unmöglicher oder auch unwahrscheinlicher Zielbahnen reduziert werden. Gleichwohl verbleibt je nach Wahl der Anfangs- und Endpositionen eine große Anzahl möglicher Zielbahnen.

Weiterhin können Lösungen ausgeschlossen werden, die bestimmte Randbedingungen erfüllen. Bspw. können Lösungen ausgeschlossen werden, deren Entfernung einen Maximalwert überschreitet, da bspw. die Reichweite der verwendeten Anordnung von Wasserschallaufnehmern bzw. Sensorreichweite begrenzt ist. Entsprechendes gilt für eine Minimalentfernung. Darüber hinaus kann als Randbedingung der Lagewinkel herangezogen werden. Will man nur anlaufende Ziele zulassen, so können Lösungen mit Lagewinkeln kleiner als -90° und mit Lagewinkeln größer als +90° ausgeschlossen werden.

Darüber hinaus können Lösungen ausgeschlossen werden, welche über Land führen würden oder mit anderen Schifffahrtshindernissen, wie Untiefen, z.B. Sandbänken, kollidieren würden.

Alle aufgefundenen Lösungen innerhalb des verbleibenden Lösungsraumes werden sodann in einem weiteren Schritt visualisiert. Dabei wird vorteilhafterweise statt des oben angegebenen Wertes von *Q(i, j)* als Qualitätsmaß der inverse und auf den Bereich zwischen 0 und 1, d.h. auf das Intervall [0, 1] normierte Wert von *Q(i, j)* verwendet. D.h. $Q(i, j)$ wird ersetzt durch $Qinv(i, j) = min(Q)/Q(i, j)$.

Die rechnerisch beste Lösung ergibt sich somit für die Zielbahn, für die Q minimal bzw. *Qinv(i, j)* = 1 ist.

Die Visualisierung des Qualitätsmaßes kann auf verschiedenen Weisen erfolgen und wird nachfolgend anhand des in Fig. 5 dargestellten Szenariums erläutert, bei dem das Eigenboot entlang einer Bewegungsbahn 19 und das Ziel entlang einer Zielbahn 20 fährt. Die Anfangspeilung zum Zeitpunkt 0 beträgt 90° gegen Nord, d.h. das Ziel befindet sich östlich vom Eigenboot. Die Anfangsentfernung beträgt R0=15km. Die Zielgeschwindigkeit beträgt in dem angenommenen Beispiel 5,1 m/s und der Zielkurs 270°, d.h. das Ziel fährt mit West-Kurs. Der Anfangslagewinkel, d.h. der Lagewinkel zum Zeitpunkt 0, beträgt 0°.

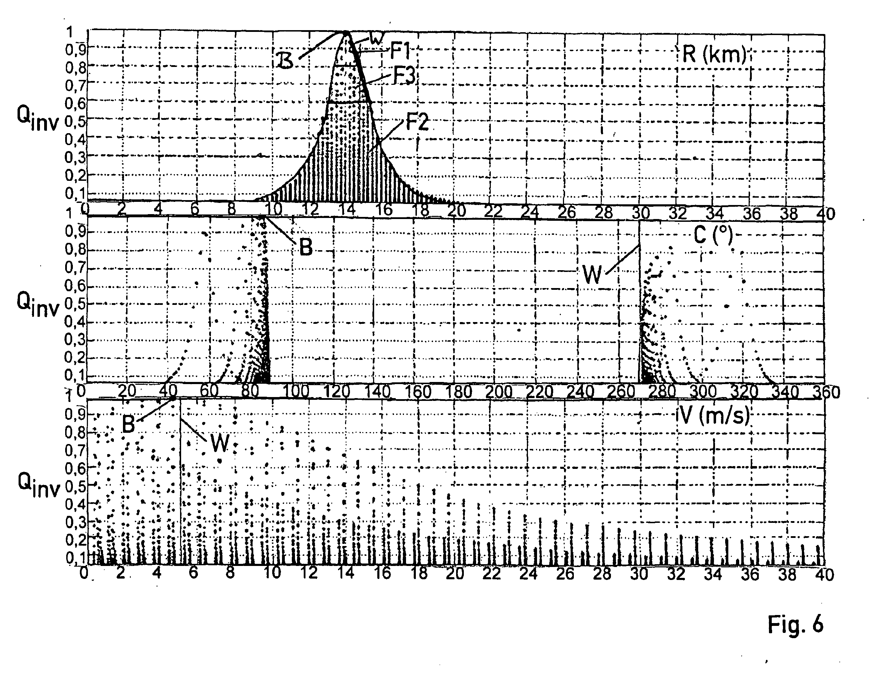

Fig. 6 zeigt drei Diagramme, bei denen das auf [0,1] normierte Qualitätsmaß *Qinv* über die Zielentfernung *R* bei Trackbeginn - wobei statt dieser auch als "Zielstartentfernung" bezeichneten Zieentfernung bei Trackbeginn auch die jeweils aktuelle Zielentfernung verwendet werden kann - (oben), den Zielkurs *C* (Mitte) und die Zielgeschwindigkeit *V* (unten) aufgetragen ist. Für besonders wahrscheinliche Lösungen gilt, dass das Qualitätsmaß *Qinv* größer als 0,8 ist. Unter dieser Voraussetzung gilt, dass die Zielstartentfernung *R* zwischen 13,5km und 14,5km liegt. Die in den Fig. 6 bis 14 mit B symbolisierte beste Lösung mit einem Qualitätsmaß *Qinv von* 1 liegt bei *R* = 14km. Da das Erwartungsgebiet für die Zielentfernung *R* für dieses Mindestqualitätsmaß relativ schmal ist, d.h. zwischen 13,5 und 14,5km liegt, kann davon ausgegangen werden, dass die beste Lösung ziemlich wahrscheinlich ist, d.h. der in den Fig. 6 bis 14 mit W symbolisierten wahren Lösung mit den wahren bzw. tatsächlichen Zielparametern entspricht bzw. recht nahe kommt.

Das mittlere Diagramm zeigt das Qualitätsmaß *Qinv* über den Zielkurs C. Man erkennt, dass mehrere potentielle Lösungsgebiete existieren und zwar einerseits für Lösungen mit einem ablaufenden Zielkurs von ca. 75° bis 90° und im Bereich von ca. 55° sowie für Lösungen mit einem anlaufenden Zielkurs von ca. 285° und 315° bis 320°. Die beste Lösung liegt bei ca. 90°, bei der sich ein Qualitätsmaß *Qinv* von 1 ergibt. Dies ist jedoch ein falscher Kurs, da der richtige Kurs gemäß Fig. 5 270° beträgt. Dieses Diagramm des Qualitätsmaßes *Qinv* über dem Zielkurs *C* zeigt dem Bediener jedoch auf den ersten Blick, dass aufgrund der breiten Streuung möglicher Gebiete für den Zielkurs *C* eine hohe Unsicherheit bzgl. der besten Lösung besteht. Der Bediener erkennt somit, dass er der besten Lösung trotz des hohen Qualitätsmaßes *Qinv* von 1 nicht unbedingt vertrauen kann, da auch andere Lösungen recht wahrscheinlich sind.

Entsprechendes gilt für die Zielgeschwindigkeit *V*, welche in dem unteren Diagramm von Fig. 6 dargestellt ist. Zielgeschwindigkeiten *V* mit einem Qualitätsmaß *Qinv* von mindestens 0,8 liegen in einem sehr breiten Bereich von etwa 0,5 bis 10,5m/s. Der Bediener erkennt, dass die beste Lösung, welche für das Qualitätsmaß *Qinv* 1 mit 4,7m/s angegeben ist, wenig zuverlässig ist.

Diese Darstellung des Qualitätsmaßes erlaubt dem Bediener folgende Interpretation: Die Zielentfernung liegt recht wahrscheinlich in einem Bereich zwischen 13,5 und 14,5km. Der Zielkurs lässt sich jedoch ebenso wie die Zielgeschwindigkeit noch nicht genau bestimmen und benötigt zur genaueren Angabe weitere Messdaten.

Diese in Fig. 6 gezeigte Art der Visualisierung des Qualitätsmaßes *Qinv* lässt sich weiter dadurch verbessern, dass die dargestellten Symbole für das Qualitätsmaß *Qinv* eingefärbt sind. Bspw. können Symbole für Werte des Qualitätsmaßes *Qinv* größer als ein oberer Wert in einer ersten Farbe F1, Symbole für Werte des Qualitätsmaßes *Qinv* unterhalb eines zweiten Wertes in einer zweiten Farbe F2 und Symbole für Werte des Qualitätsmaßes *Qinv* in einem dazwischen liegenden Wertebereich in einer dritten Farbe F3 dargestellt werden. Die Zahl der Wertebereich ist jedoch nicht auf drei beschränkt, sondern kann auch größere oder kleinere Werte annehmen. Dabei wird vorzugsweise jedem Wertebereich eine Farbe zugeordnet.

Alternativ kann jedoch auch ein Farbverlauf in Abhängigkeit des jeweiligen Wertes des Qualitätsmaßes herangezogen werden, wobei bspw. hohe Werte für das Qualitätsmaß in Rot-Tönen und niedrige Werte in Blau-Tönen dargestellt werden. Darüber hinaus lässt sich die Visualisierung weiter dadurch verbessern, dass Lösungen mit einem Qualitätsmaß kleiner als ein Grenzwert gar nicht dargestellt werden.

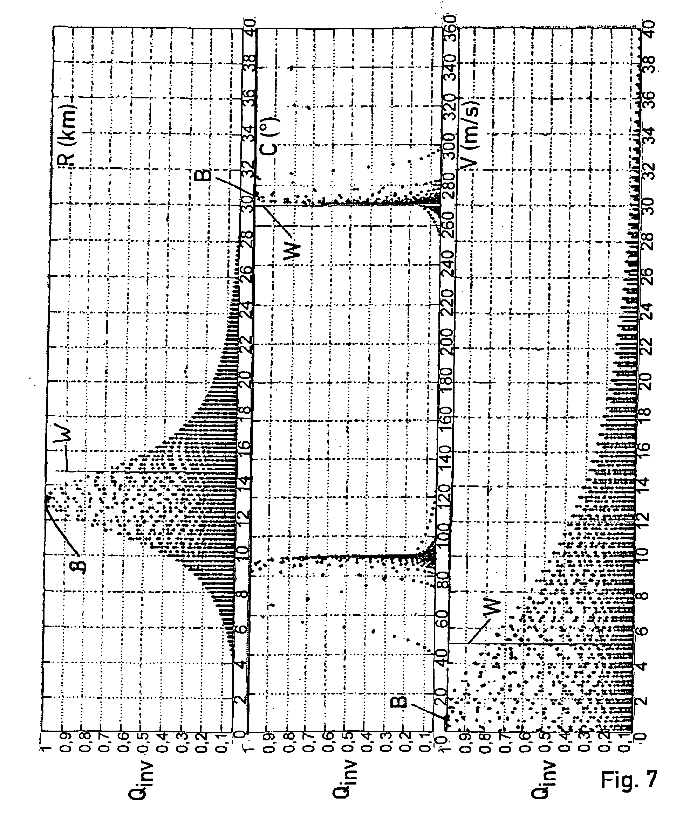

Fig. 7 zeigt Fig. 6 entsprechende Diagramme, jedoch zu einem späteren Verarbeitungszeitpunkt. Aus dem mittleren Diagramm lässt sich nunmehr ablesen, dass die beste Lösung mit einem Qualitätsmaß *Qinv* von 1 bei rund 275° liegt. Im unteren Diagramm für die Zielgeschwindigkeit *V* hat sich jedoch nunmehr die beste Lösung für etwa 1 m/s ergeben, wobei jedoch das Gebiet für gute Lösungen bzgl. der Zielgeschwindigkeit *V* schmaler geworden ist. Der Bediener erkennt jedoch aus diesen Diagrammen, dass der Zielkurs *C* immer noch recht unsicher zu bestimmen ist, ebenso wie die Zielgeschwindigkeit *V*.

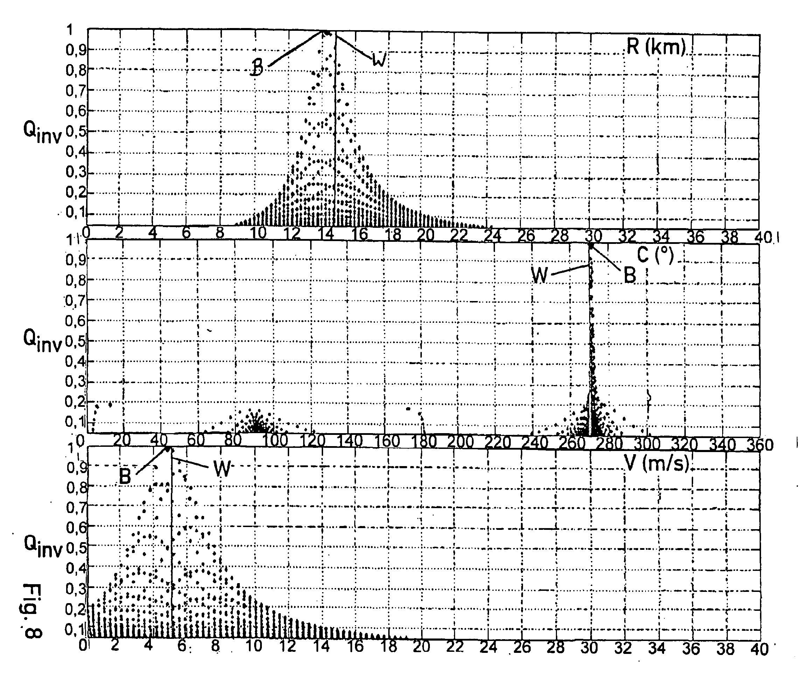

Fig. 8 zeigt die Diagramme gemäß den Fig. 6 und 7, jedoch zu einem noch späteren Verarbeitungszeitpunkt. Der Bediener kann nunmehr erkennen, dass der Zielkurs *C* sehr wahrscheinlich bei 270° und die Zielgeschwindigkeit *V* recht wahrscheinlich bei 4,8m/s liegen. Die Zielstartentfernung *R* ergibt sich für die beste Lösung nunmehr zu 14,5km. Für alle Parameter sind nunmehr die Gebiete für gute Lösungen recht schmal, was dem Bediener anzeigt, dass die beste Lösung recht zuverlässig ist.

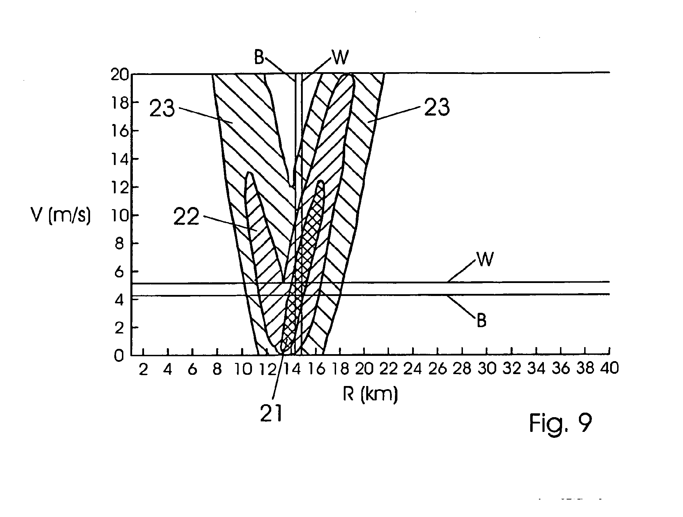

Fig. 9 veranschaulicht eine weitere Möglichkeit der zweidimensionalen Visualisierung des Qualitätsmaßes *Qinv* und zwar sowohl über die Zielgeschwindigkeit *V* als auch über die Zielstartentfernung *R*. Der Wert des Qualitätsmaßes *Qinv* lässt sich anhand einer Farbcodierung ablesen. Der Einfachheit halber sind jedoch lediglich Farbbereiche durch Schraffuren schematisch veranschaulicht. Die in zwei Richtungen schraffierte Fläche 21 symbolisiert ein Gebiet mit einem hohen Qualitätsmaß, bspw. größer als 0,8. Die Flächen 22 symbolisieren ein Gebiet mit einem Qualitätsmaß geringeren Grades, bspw. zwischen 0,6 und 0,8, während die Flächen 23 ein Gebiet mit einem niedrigen Qualitätsmaß, bspw. kleiner als 0,6, angeben.

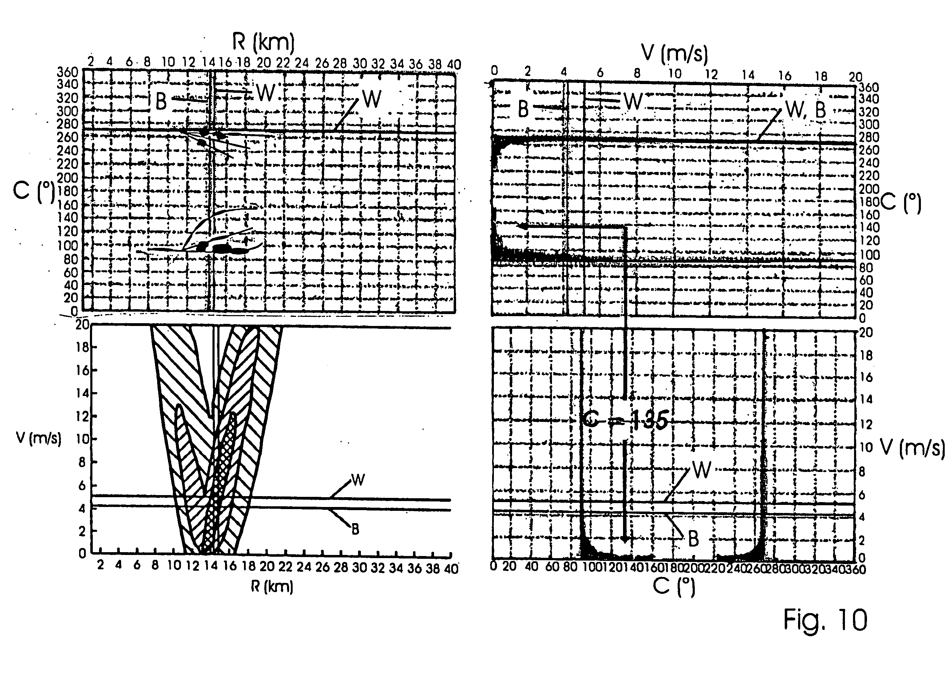

Fig. 10 zeigt eine Darstellung des Lösungsraums mit vier zweidimensionalen Diagrammen wobei jedes einzelne Diagramm analog zu Fig. 9 erstellt ist. Bei dieser Darstellung ist das Qualitätsmaß *Qinv* wiederum jeweils über zwei Zielparameter dargestellt. In dem Diagramm oben links ist das Qualitätsmaß *Qinv* über die Zielentfernung *R* und den Zielkurs *C* dargestellt. In dem Diagramm unten links ist das Qualitätsmaß *Qinv* über die Zielentfernung *R* und die Zielgeschwindigkeit *V* dargestellt. In dem Diagramm unten rechts ist das Qualitätsmaß *Qinv* über die Zielgeschwindigkeit *V* und den Zielkurs *C* dargestellt, während in dem Diagramm oben rechts die Zielentfernung *R* in umgekehrter Weise über den Zielkurs *C* und die Zielgeschwindigkeit *V* dargestellt ist.

Die gewählte Anordnung ermöglicht es sehr schnell die Abhängigkeit eines Parameters von den beiden anderen zu ermitteln:

Die beiden linken Diagramme haben die gleiche x-Achse *R* und zeigen die Abhängigkeit der Entfernung *R* von der Geschwindigkeit *V* und dem Kurs *C*.

Die beiden unteren Diagramme haben die gleiche y-Achse *V* und zeigen die Anhängigkeit der Geschwindigkeit *V* von der Entfernung *R* und dem Kurs *C*.

Die beiden oberen Diagramme haben die gleiche y-Achse *C* und zeigen die Abhängigkeit des Kurses *C* von der Entfernung *R* und der Geschwindigkeit *V*.

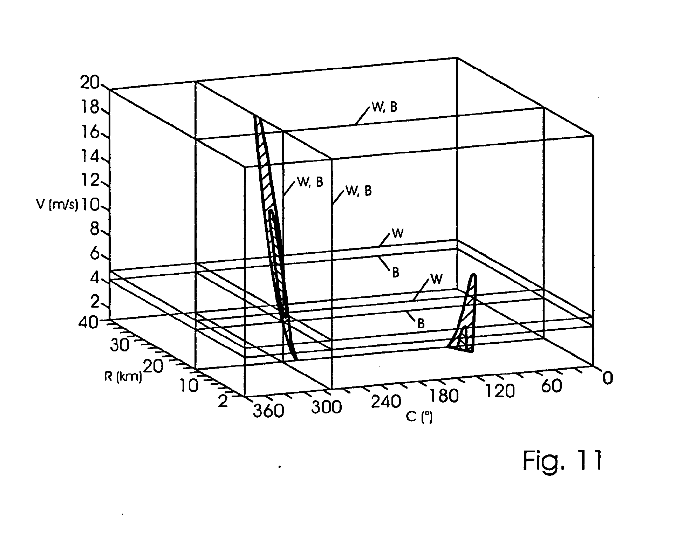

Fig. 11 zeigt eine komplexere Art der Darstellung des Lösungsraumes, wobei in einem dreidimensionalen Diagramm das Qualitätsmaß *Qinv* sowohl über die Zielentfernung *R*, den Zielkurs *C* und die Zielgeschwindigkeit *V* dargestellt ist. Der Wert des Qualitätsmaßes ist dabei in einer der Fig. 9 entsprechenden Weise codiert, d.h. bspw. in Form der Farbe der darzustellenden Flächen, die hier aus Darstellungsgründen nur konturhaft wiedergegeben sind.

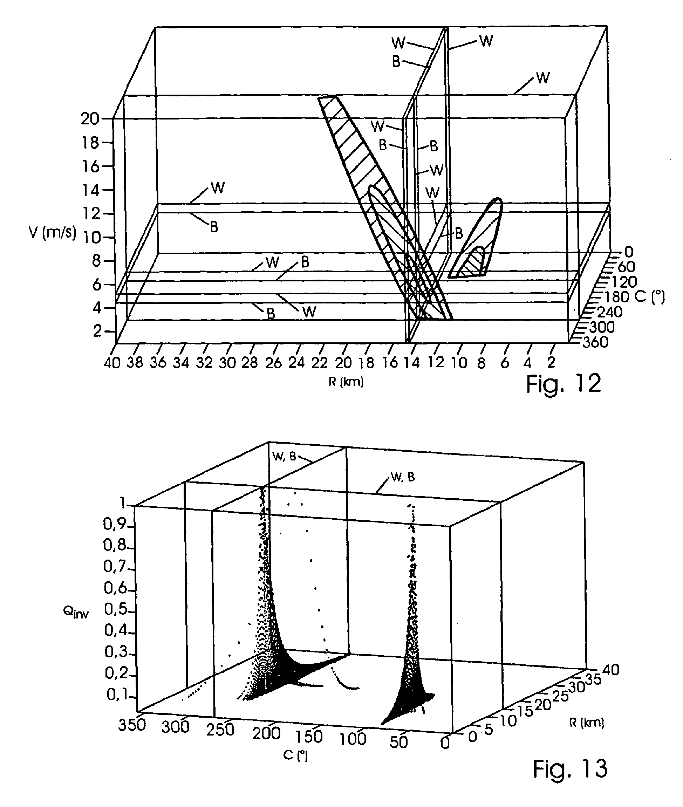

Fig. 12 veranschaulicht die Situation gemäß Fig. 11 jedoch mit einem anderen Betrachtungswinkel der dreidimensionalen Darstellung. Durch eine Änderung des Betrachtungswinkels können Lösungsgebiete besser sichtbar gemacht werden.

Eine weitere dreidimensionale Darstellung des Lösungsraumes lässt sich durch dreidimensionale Diagramme realisieren, bei denen das Qualitätsmaß *Qinv* entlang einer ersten Achse und zwei Zielparameter entlang zwei weiterer Achsen veranschaulicht werden. Ein derartiges Diagramm ist in Fig. 13 gezeigt, wo das Qualitätsmaß *Qinv* über den Zielkurs *C* und die Zielentfernung *R* aufgetragen ist.

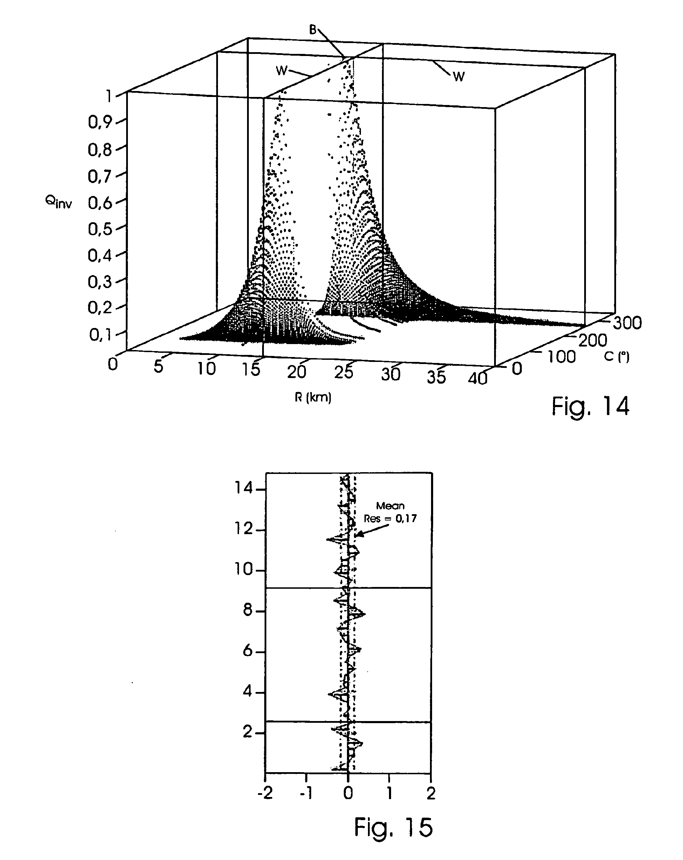

Fig. 14 zeigt die Situation gemäß Fig. 13, jedoch mit einem anderen Betrachtungswinkel.

Fig. 15 veranschaulicht für eine ausgewählte Lösung ein zugehöriges Diagramm der Peilwinkeldifferenzen zwischen dem gemessenen und dem jeweils korrespondierenden angenommenen Peilwinkel. Je größer die Ausschläge um die senkrechte Nulllinie sind, desto schlechter ist das Qualitätsmaß der zugehörigen Lösung.

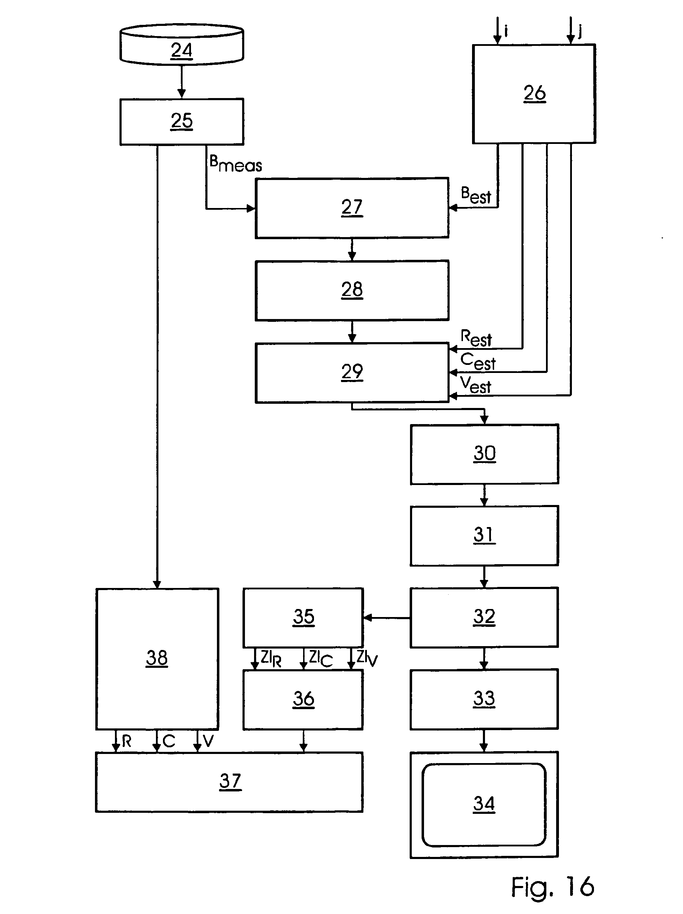

Fig. 16 veranschaulicht eine erfindungsgemäße Vorrichtung zur Durchführung eines erfindungsgemäßen Verfahrens. Mittels einer als Zylinderbasis ausgebildeten Anordnung 24 von Wasserschallaufnehmern werden Schallwellen von einem Ziel empfangen und ihre Empfangssignale in einem Richtungsbildner 25 derart verarbeitet, dass gemessene Peilwinkel $B_{meas}$ zu einem Ziel bestimmt werden können.

Ferner ist eine Recheneinheit 26 zum Ermitteln eines angenommenen Peilwinkels $B_{est}$ aus einer angenommenen Position des Ziels längs einer angenommenen Zielbahn $Z(i, j)$ vorgesehen. Diese Recheneinheit 26 stellt insbesondere einen angenommenen Peilwinkel $B_{est}$ sowie zur entsprechenden Zielbahn $Z(i, j)$ gehörende angenommene Zielparameter für die Zielentfernung $R_{est}$ für den Zielkurs $C_{est}$ und für die Zielgeschwindigkeit $V_{est}$ bereit.

Der gemessene Peilwinkel $B_{meas}$ und der angenommene Peilwinkel $B_{est}$ werden einer Differenzeinheit 27 zugeführt, welche beide Werte voneinander subtrahiert.

In einer Qualitätsmaßeinheit 28 wird das Qualitätsmaß *Qinv* für eine angenommene Zielbahn aus einer Vielzahl von Peilwinkeldifferenzen berechnet und das Qualitätsmaß *Qinv* sodann mit den zugehörigen angenommenen Zielparametern in einer Verknüpfungseinheit 29 zu einer Lösung verknüpft. Diese von den Einheiten 26 bis 29 ausgeführten Schritte werden für jede angenommene Zielbahn wiederholt und die somit erhaltenen Lösungen in einem Datenspeicher gespeichert. Sodann werden in einer ersten Eliminierungseinheit 30 unmögliche Lösungen und in einer zweiten Eliminierungseinheit 31 Lösungen außerhalb vorgegebener Randbedingungen eliminiert.

In einer Lösungsraumeinheit 32 werden dann nach der Eliminierung verbleibende Lösungen zu einem Lösungsraum zusammengefasst, der weiterhin eine Vielzahl angenommener Zielbahnen abbildet.

In einer Darstellungseinheit 33 wird der Lösungsraum für eine grafische Visualisierung des Qualitätsmaßes in Abhängigkeit der Zielparameter aufbereitet und die somit aufbereiteten Qualitätsmaßwerte und Zielparameter auf einer Anzeigevorrichtung 34 dargestellt. Diese Darstellung des Lösungsraumes gibt dem Bediener ein "Werkzeug" an die Hand, das ihm ermöglicht, auf einen Blick abzuschätzen, wie wahrscheinlich bzw. zuverlässig eine bestimmte Lösung, insbesondere die ihm automatisch als beste Lösung angegebene Lösung ist

Darüber hinaus kann aus dem Lösungsraum automatisch ein Zuverlässigkeitsgrad bestimmt werden. Die Lösungsraumeinheit 32 übergibt zu diesem Zweck den Lösungsraum, d.h. die Vielzahl angenommener möglicher Lösungen mit einem Qualitätsmaß, das eine Mindestqualität angibt, an eine Zuverlässigkeitsindikatoreinheit 35, welche für jeden Zielparametertyp, d.h. für die Zielentfernung, den Zielkurs und die Zielgeschwindigkeit, jeweils einen Zuverlässigkeitsindikator aus der Lage bzw. Verteilung der Qualitätsmaße über den jeweiligen Zielparameter, d.h. über die Zielentfernung, den Zielkurs und die Zielgeschwindigkeit errechnet. Die Zuverlässigkeitsindikatoreinheit ermittelt jeweils aus der Verteilung der Zielparameter für die Vielzahl möglicher Lösungen einen Wert, der eine Aussage über die Zuverlässigkeit des jeweiligen Zielparameters erlaubt.

Bspw. wird auf die Zielentfernung gemäß Fig. 7, oben, Bezug genommen. Hochqualitative Lösungen, bspw. Lösungen mit einem inversen Qualitätsmaß größer als 0,8 liegen in einem Bereich von ca. 12 bis 14,5 km. Sie sind verteilt um einen Mittelwert von ca. 13,5 km. Ein Zuverlässigkeitsindikator $ZI_R$ für die Zielentfernung berechnet bspw. folgende Summe bzw. ist im einfachsten Fall gleich dieser Summe:

$$\sum_{i,j} \left| R(i,j) - \overline{R} \right|$$

Dabei bezeichnet R(i, j) die Zielentfernung der Zielbahn Z(i, j) und $\overline{R}$ bezeichnet den mittleren Wert der Zielentfernungen aller Zielbahnen Z(i, j) für alle i und j.

Vorteilhafterweise findet eine Gewichtung der Differenzen der Zielentfernung von ihrem Mittelwert mit dem zur jeweiligen Zielbahn gehörenden inversen Qualtitätsmaß *Qinv(i, j)* statt, so dass sich der Zuverlässigkeitsindikator $ZI_R$ für die Zielentfernung gemäß folgender Summe ermittelt:

$$\sum_{i,j} Qinv(i,j) \cdot \left| R(i,j) - \overline{R} \right|$$

Anstelle des Betrages der Differenz der Zielentfernung von dem Mittelwert der Zielentfernung kann auch das Quadrat der jeweiligen Zielentfernung herangezogen werden, so dass sich der o.g. Term wie folgt ergibt:

$$\sum_{i,j} Qinv(i,j) \cdot \left( R(i,j) - \overline{R} \right)^2$$

Ferner kann die Zuverlässigkeitsindikatoreinheit 35 diesen Zuverlässigkeitsindikator für die Zielentfernung derart normieren, dass analog gebildete Zuverlässigkeitsindikatoren für den Zielkurs und die Zielgeschwindigkeit untereinander vergleichbar sind. Hierzu wird zunächst die Differenz durch Normierung auf den mittleren Wert des Zielparameters dimensionslos gemacht und vorteilhafterweise, jedoch nicht notwendigerweise der Summenterm mit einer Umrechnungskonstanten $k_R$ multipliziert. Die Umrechnungskonstante $k_R$ dient dazu die Zuverlässigkeitsindikatoren der verschiedenen Zielparameter unterschiedlich gewichten zu können, so dass bspw. der Zuverlässigkeitsindikator für einen der Zielparameter eine höhere Bedeutung hat als ein Zuverlässigkeitsindikator eines anderen Zielparameters. Der Zuverlässigkeitsindikator $ZI_R$ für die Zielentfernung ergibt sich somit zu

$$k_R \cdot \sum_{i,j} Qinv(i,j) \cdot \left( \frac{R(i,j) - \overline{R}}{\overline{R}} \right)^2 .$$

In analoger Weise kann der Zuverlässigkeitsindikator $ZI_C$ für den Zielkurs gemäß einem der folgenden Termen berechnet werden:

$$\sum_{i,j} \left| C(i,j) - \overline{C} \right|$$

$$\sum_{i,j} Qinv(i,j) \cdot \left| C(i,j) - \overline{C} \right|$$

$$\sum_{i,j} Qinv(i,j) \cdot \left( C(i,j) - \overline{C} \right)^2$$

$$k_C \cdot \sum_{i,j} Qinv(i,j) \cdot \left( \frac{C(i,j) - \overline{C}}{\overline{C}} \right)^2$$

Ferner wird von der Zuverlässigkeitsindikatoreinheit 35 der Zuverlässigkeitsindikator für die Zielgeschwindigkeit $ZI_V$ in analoger Weise nach einem der folgenden vier Terme ermittelt:

$$\sum_{i,j} \left| V(i,j) - \overline{V} \right|$$

$$\sum_{i,j} Qinv(i,j) \cdot \left| V(i,j) - \overline{V} \right|$$

$$\sum_{i,j} Qinv(i,j) \cdot \left( V(i,j) - \overline{V} \right)^2$$

$$k_V \cdot \sum_{i,j} Qinv(i,j) \cdot \left( \frac{V(i,j) - \overline{V}}{\overline{V}} \right)^2$$

In den vorgenannten Summentermen kann bei alternativen Ausführungen jeweils das inverse Qualitätsmaß $Qinv(i,j)$ quadriert, d.h. mit der Potenz 2 oder einer anderen Potenz versehen werden, um den Einfluss weniger guter Lösungen weiter zu reduzieren.

Die auf diese Weise ermittelten Zuverlässigkeitsindikatoren $ZI_R$, $ZI_C$, $ZI_V$ werden von der Zuverlässigkeitsindikatoreinheit 35 der Zuverlässigkeitsgradeinheit 36 zur Verfügung gestellt. Diese ermittelt den Zuverlässigkeitsgrad ZG bspw. anhand folgender Gleichung:

$$ZG = \max\left[ ZI_R, ZI_C, \tilde{ZI_V} \right]$$

D.h. es wird der Maximalwert der Zuverlässigkeitsindikatoren für die Zielentfernung, den Zielkurs und die Zielgeschwindigkeit ermittelt. Der Maximalwert ist der ungünstigste Wert und gibt somit ein Maß für die Unzuverlässigkeit und damit umgekehrt auch für die Zuverlässigkeit des Lösungsraumes an.

Alternativ kann der Zuverlässigkeitsgrad auch aus dem Mittelwert der Zuverlässigkeitsindikatoren für die Zielparameter ermittelt werden, bspw. anhand folgender Gleichung:

$$ZG = \frac{1}{3} \cdot \left[ ZI_R + ZI_C + ZI_V \right]$$

Die Zuverlässigkeitsgradeinheit 36 liefert somit einen Zuverlässigkeitsgrad, welcher an eine Bewertungseinheit 37 übergeben wird.

Die Bewertungseinheit 37 erhält ferner von einer TMA-Einheit 38 die Zielparameter Zielentfernung, Zielkurs und Zielgeschwindigkeit einer optimierten Lösung. Diese TMA-Einheit 38 ermittelt diese optimierte Lösung für Zielparameter bspw. gemäß DE 34 46 658 C2, DE 101 29 726 A1 oder EP 1 531 339 A2.

Die auf eine derartige herkömmliche Weise ermittelten Zielparameter werden in der Bewertungseinheit 37 mittels des Zuverlässigkeitsgrades ZG von der Zuverlässigkeitsgradeinheit 36 bewertet. Der Zuverlässigkeitsgrad kann dabei durch einen Zahlenwert oder einen Farbcode über eine Anzeigevorrichtung dem Bediener ausgegeben werden.

Der Bediener erhält auf diese Weise eine Information über die Zuverlässigkeit der nach einem vorbestimmten Optimierungskriterium optimierten Lösung.

Die genannten Einheiten 26 bis 38 sind vorzugsweise als Algorithmus für einen Rechner in Form von Software programmiert. Sie können jedoch auch in Form von elektronischen Schaltungen in Form von Hardware realisiert sein.

Die Erfindung ist nicht auf die Anwendung des Verfahrens in Trägerfahrzeugen, insbesondere Überwasser- oder Unterwasserfahrzeugen beschränkt. Vielmehr kann die Erfindung auch bei fest installierten Sonaranlagen, bspw. zur Überwachung von Küsten, Wasserstraßen und/oder Hafenanlagen oder auf See installierter Einrichtungen, wie Ölbohrplattformen, eingesetzt werden, da die Bestimmung der Zielparameter auch ohne Eigenmanöver möglich ist.

Alle in der vorstehenden Beschreibung sowie in den Ansprüchen genannten Merkmale sind erfindungsgemäß sowohl einzeln als auch in beliebiger Kombination miteinander einsetzbar. Die Erfindung ist daher nicht auf die beschriebenen bzw. beanspruchten Merkmalskombinationen beschränkt. Vielmehr sind alle Kombinationen von Einzelmerkmalen als offenbart zu betrachten.

**Patentansprüche**

1. Verfahren zum passiven Bestimmen von Zielparametern durch richtungsselektiven Empfang von Schallwellen, die von einem Ziel abgestrahlt oder gesendet werden, mittels einer Anordnung (24) von Wasserschallaufnehmern einer Sonarempfangsanlage, insbesondere auf einem Trägerfahrzeug, aus geschätzten Peilwinkeln, die aus geschätzten Positionen des Ziels ermittelt werden, und von der Anordnung (24) am Messort gemessenen Peilwinkeln, wobei eine Peilwinkeldifferenz zwischen gemessenen und geschätzten Peilwinkeln iterativ minimiert wird und bei Erreichen des Minimums die geschätzte Position die Zielparameter einer optimierten Lösung für eine Ausgabe von Zielentfernung, Zielposition, Zielkurs und Zielgeschwindigkeit liefert, die während jedes Verarbeitungszyklus von einer Reihe aufeinander folgender Verarbeitungszyklen aktualisiert wird, wobei während jedes Verarbeitungszyklus aus möglichen Lösungen für die zu bestimmenden Zielparameter ($R_{est}$, $C_{est}$, $V_{est}$), nämlich einen angenommenen Zielkurs ($C_{est}$), eine angenommene Zielentfernung ($R_{est}$) und eine angenommene Zielgeschwindigkeit ($V_{est}$), eine Vielzahl unterschiedlicher Zielbahnen ($Z(i, j)$) berechnet werden, dass vom Messort für jede dieser möglichen Lösungen zugehörige Peilwinkel ($B_{est}$) angenommen werden, dass mit den angenommenen Peilwinkeln ($B_{est}$) unter Berücksichtigung der am Messort gemessenen Peilwinkel ($B_{meas}$) ein Qualitätsmaß (Q, Qinv) längs jeder der angenommenen Zielbahnen ($Z(i, j)$) berechnet wird, **dadurch gekennzeichnet, dass** aus der Verteilung des Qualitätsmaßes (Q, Qinv) über jeden zu bestimmenden Zielparameter ($R_{est}$, $C_{est}$, $V_{est}$) jeweils ein Zuverlässigkeitsindikator ($ZI_R$, $ZI_C$, $ZI_V$) ermittelt wird und aus den Zuverlässigkeitsindikatoren ($ZI_R$, $ZI_C$, $ZI_V$) der jeweiligen Zielparameter ($R_{est}$, $C_{est}$, $V_{est}$) ein Zuverlässigkeitsgrad (ZG) zur Bestimmung der Zuverlässigkeit der optimierten Lösung abgeleitet wird, welcher mittels eines Zahlenwertes und/oder graphisch über eine Anzeigevorrichtung ausgegeben wird.

2. Verfahren nach Anspruch 1, **dadurch gekennzeichnet, dass** die angenommenen Zielbahnen ($Z(i, j)$) als Zielbahnen mit konstantem Kurs und konstanter Geschwindigkeit bestimmt werden, wobei ein zu einem ersten am Messort der Sonarempfangsanlage gemessenen Peilwinkel ($B_{meas\ first}$) zugehöriger erster Peilstrahl (1; 10) sowie ein zu einem am Messort der Sonarempfangsanlage zuletzt gemessenen Peilwinkel ($B_{meas\ last}$) zugehöriger letzter Peilstrahl (2; 14) festgelegt werden, wobei jede angenommene Zielbahn ($Z(i, j)$) auf dem ersten Peilstrahl (1; 10) in einem Anfangspunkt beginnt und auf dem letzten Peilstrahl (2; 14) in einem Endpunkt endet, dass die Anfangspunkte der Zielbahnen auf dem ersten Peilstrahl sowie die Endpunkte der am gleichen Anfangspunkt beginnenden Zielbahnen ($Z(i, j)$) auf dem letzten Peilstrahl (2; 14) in unterschiedlichen Entfernungen zum zugehörigen Messort angeordnet sind, dass längs der angenommenen Zielbahnen Zielpositionen abhängig von der angenommenen Zielgeschwindigkeit angenommen werden und bezüglich der Messorte angenommene Peilstrahlen bilden und daraus angenommene Peilwinkel ($B_{est}$) ermittelt werden.

3. Verfahren nach Anspruch 2, **dadurch gekennzeichnet, dass** der erste (1; 10) und/oder der letzte (2; 14) Peilstrahl variierbar ist.

4. Verfahren nach einem der vorhergehenden Ansprüche, **dadurch gekennzeichnet, dass** das Qualitätsmaß (Q) einer angenommenen Zielbahn ($Z(i, j)$) aus der Summe der, insbesondere gewichteten, Quadrate von Differenzen des entlang der Zielbahn ($Z(i, j)$) angenommenen Peilwinkels ($B_{est}$) und des dem gleichen Messort zugeordneten gemessenen Peilwinkels ($B_{meas}$) berechnet wird.

5. Verfahren nach einem der Ansprüche 1 bis 3, **dadurch gekennzeichnet, dass** das Qualitätsmaß (Qinv) einer angenommenen Zielbahn ($Z(i, j)$) aus der invertierten Summe der, insbesondere gewichteten, Quadrate der Differenzen ($B_{meas}$ - $B_{est}$) des entlang der Zielbahn ($Z(i, j)$) angenommenen Peilwinkels ($B_{est}$) und des dem gleichen Messort zugeordneten gemessenen Peilwinkels ($B_{meas}$) berechnet wird und die Differenzen mit der kleinsten dieser Summen aller angenommenen Zielbahnen ($Z(i, j)$) multipliziert wird.

6. Verfahren nach einem der vorhergehenden Ansprüche, **dadurch gekennzeichnet, dass** eine mögliche Lösung (15) ausgeschlossen wird, wenn die zugeordnete Zielbahn nicht alle zu den gemessenen Peilwinkeln gehörenden Peilstrahlen schneidet.

7. Verfahren nach einem der vorhergehenden Ansprüche, **dadurch gekennzeichnet, dass** eine mögliche Lösung ausgeschlossen wird, wenn sie außerhalb einer oder mehrerer vorgegebener Randbedingungen von bekannten Extremwerten der Zielparameter liegt.

8. Verfahren nach einem der vorhergehenden Ansprüche, **dadurch gekennzeichnet, dass** der Zuverlässigkeitsgrad als "hoch" bestimmt wird, wenn alle jeweiligen Zielparameter der Lösungen mit einem eine Mindestqualität anzeigenden Qualitätsmaß (Q, Qinv) innerhalb einer vorbestimmten Bandbreite um den Mittelwert des jeweiligen Zielparameters liegen.

9. Verfahren nach einem der vorhergehenden Ansprüche, **dadurch gekennzeichnet, dass** während jedem Verarbeitungszyklus die Zielparameter aller Lösungen mit einem eine Mindestqualität überschreitenden Qualitätsmaß mittels eines oder mehrerer zweidimensionaler Diagramme des Qualitätsmaßes (Q, *Qinv*) über

   a) den angenommenen Zielkurs (*C*) und/oder
   b) die angenommene Zielentfernung (*R*) und/oder
   c) die angenommene Zielgeschwindigkeit (*V*)

   grafisch visualisiert auf einer Anzeigevorrichtung (34) dargestellt werden.

10. Verfahren nach einem der vorhergehenden Ansprüche, **dadurch gekennzeichnet, dass** während jedem Verarbeitungszyklus die Zielparameter aller Lösungen mit einem eine Mindestqualität überschreitenden Qualitätsmaß mittels eines oder mehrerer dreidimensionaler Diagramme des Qualitätsmaßes (Q, *Qinv*) über

   a) den angenommenen Zielkurs (*C*) und die angenommene Zielentfernung (*R*) und/oder
   b) den angenommenen Zielkurs (*C*) und die angenommene Zielgeschwindigkeit (*V*) und/oder
   c) die angenommene Zielentfernung (*R*) und die angenommene Zielgeschwindigkeit (*V*) und/oder
   d) die angenommene Zielentfernung (*R*), den angenommenen Zielkurs (*C*) und die angenommene Zielgeschwindigkeit (*V*)

   grafisch visualisiert auf einer Anzeigevorrichtung (34) dargestellt werden.

11. Verfahren nach einem der vorhergehenden Ansprüche, **dadurch gekennzeichnet, dass** während jedem Verarbeitungszyklus die Zielparameter aller Lösungen mit einem eine Mindestqualität überschreitenden Qualitätsmaß wenigstens mittels vier zweidimensionaler Diagramme des Qualitätsmaßes (Q, *Qinv*) und zwar jeweils über zwei Zielparameter (*C, R; C, V; R, V;*) grafisch visualisiert auf einer Anzeigevorrichtung (34) dargestellt werden, wobei der Wert des Qualitätsmaßes (Q, *Qinv*), insbesondere farblich gemäß einer Farbskala, codiert ist.

12. Verfahren nach einem der vorhergehenden Ansprüche, **dadurch gekennzeichnet, dass** für jeden Zielparameter (*C, R, V*) ein Erwartungsgebiet berechnet wird, für das das Qualitätsmaß (Q, *Qinv*) eine Mindestqualität erreicht.

13. Verfahren nach einem der vorhergehenden Ansprüche, **dadurch gekennzeichnet, dass** die Lösung mit dem höchstwertigen Qualitätsmaß (*C, R, V*) markiert wird.

14. Verfahren nach einem der vorhergehenden Ansprüche, **dadurch gekennzeichnet, dass** mittels mehrerer Anordnungen (24) von Wasserschallaufnehmern Schallwellen empfangen und somit von unterschiedlichen Messorten Peilwinkel zu einem Ziel gemessen werden und diese Mehrzahl von einem Ziel zugeordneten Peilwinkeln zur Abschätzung einer Zielposition nach Art einer Kreuzpeilung verwendet werden, wobei mittels dieser Abschätzung ein möglicher Lösungsraum für die möglichen Lösungen der zu bestimmenden Zielparameter eingeschränkt wird.

15. Verfahren nach einem der vorhergehenden Ansprüche, **dadurch gekennzeichnet, dass** die Frequenzen der aus einem gemessenen Peilwinkel einfallenden Schallwellen gemessen werden und diese gemessenen Frequenzen zur Abschätzung einer Zielposition verwendet werden, wobei mittels dieser Abschätzung ein möglicher Lösungsraum für die möglichen Lösungen der zu bestimmenden Zielparameter eingeschränkt wird.

16. Vorrichtung zur passiven Bestimmung von Zielparametern durch richtungsselektiven Empfang von Schallwellen die von einem Ziel abgestrahlt oder gesendet werden, mittels einer Anordnung (24) von Wasserschallaufnehmern einer Sonarempfangsanlage, insbesondere auf einem Trägerfahrzeug, mit einer Peilanlage zum Messen von Peilwinkeln ($B_{meas}$) je Verarbeitungszyklus und einer TMA-Einheit (38) zur Ausgabe einer optimierten Lösung für die Zielparameter (R, C, V), indem aus geschätzten Peilwinkeln, die aus geschätzten Positionen des Ziels ermittelt werden, und gemessenen Peilwinkeln iterativ diese optimierte Lösung während jedes Verarbeitungszyklus einer Reihe von aufeinander folgenden Verarbeitungszyklen aktualisiert wird und einer Recheneinheit (26) zum Berechnen einer Vielzahl von Zielbahnen (Z(i, j)) aus möglichen Lösungen für die zu bestimmenden Zielparameter ($R_{est}$, $C_{est}$, $V_{est}$), nämlich einen angenommenen Zielkurs ($C_{est}$), eine angenommene Zielentfernung ($R_{est}$) und eine angenommene Zielgeschwindigkeit ($V_{est}$), die Vorrichtung **gekennzeichnet durch** eine Zuverlässigkeitsindikatoreinheit (35) zum Ermitteln jeweils eines Zuverlässigkeitsindikators ($ZI_R$, $ZI_C$, $ZI_V$) aus der Verteilung des Qualitätsmaßes (Q, *Qinv*)

über jeden zu bestimmenden Zielparameter ($R_{est}$, $C_{est}$, $V_{est}$) längs jeder angenommenen Zielbahn $(Z(i, j))$ aus zugehörigen, aus den angenommenen Zielparametern ($R_{est}$, $C_{est}$, $V_{est}$) ermittelten Peilwinkeln ($B_{est}$) und aus gemessenen Peilwinkeln $(B_{meas})$, eine Zuverlässigkeitsgradeinheit (36) zum Ermitteln eines Zuverlässigkeitsgrades (ZG) aus den Zuverlässigkeitsindikatoren ($ZI_R$, $ZI_C$, $ZI_V$) der jeweiligen Zielparameter ($R_{est}$, $C_{est}$, $V_{est}$) und eine Bewertungseinheit (37) zur Bestimmung der Zuverlässigkeit der optimierten Lösung ($R$, $C$, $V$) mittels des Zuverlässigkeitsgrades (ZG), welcher zusätzlich zur optimierten Lösung ($R$, $C$, $V$) mittels eines Zahlenwertes und/oder graphisch über eine Anzeigevorrichtung ausgebbar ist.

## Claims

1. Method for the passive determination of target parameters by directionally selective receipt of sound waves, which are radiated or transmitted by a target, by means of an arrangement (24) of waterborne sound detectors of a sonar receiving system, in particular on a carrier vehicle, from estimated bearing angles, which are ascertained from estimated positions of the target, and bearing angles measured by the arrangement (24) at the measuring location, wherein a bearing angle difference between measured and estimated bearing angles is minimised iteratively and on attainment of the minimum, the estimated position supplies the target parameters of an optimised solution for an output of target distance, target position, target course and target speed, which is updated during each processing cycle of a series of consecutive processing cycles, wherein during each processing cycle, from possible solutions for the target parameters $(Rest, C_{est}, V_{est})$ to be determined, namely an assumed target course $(C_{est})$, an assumed target distance ($R_{est}$) and an assumed target speed $(Vest)$, a plurality of different target paths $(Z(i, j))$ are calculated, that from the measuring location related bearing angles $(Best)$ are assumed for each of these possible solutions, that using the assumed bearing angles $(Best)$ and taking the bearing angles $(B_{meas})$ measured at the measuring location into account, a measure of quality (Q, Qinv) is calculated along each of the assumed target paths $(Z(i, j))$, **characterised by** that from the distribution of the measure of quality (Q, Qinv) over each of the target parameters ($R_{est}$, $C_{est}$, $V_{est}$) to be determined, a reliability indicator ($ZI_R$, $ZI_C$, $ZI_V$) is ascertained in each case and from the reliability indicators ($ZI_R$, $ZI_C$, $ZI_V$) of the respective target parameters $(Rest, C_{est}, V_{est})$ a degree of reliability (ZG) is derived for determining the reliability of the optimised solution, which is output by means of a numerical value and/or graphically via a display device.

2. Method according to claim 1, **characterised by** that the assumed target paths $(Z(i, j))$ are determined as target paths with a constant course and constant speed, wherein a first signal beam (1; 10) belonging to a first bearing angle $(B_{meas\ first})$ measured at the measuring location of the sonar receiving system and a last signal beam (2; 14) belonging to a bearing angle $(B_{meas\ last})$ measured last at the measuring location of the sonar receiving system are established, wherein each assumed target path (Z(i, j)) on the first signal beam (1; 10) begins in a starting point and on the last signal beam (2; 14) ends in an end point, that the starting points of the target paths on the first signal beam and the end points of the target paths $(Z(i, j))$ beginning at the same starting point on the last signal beam (2; 14) are arranged at different distances from the related measuring location, that target positions are assumed as a function of the assumed target speed along the assumed target paths and form assumed signal beams with reference to the measuring locations and assumed bearing angles $(Best)$ are ascertained therefrom.

3. Method according to claim 2, **characterised by** that the first (1; 10) and/or the last (2; 14) signal beam is variable.

4. Method according to one of the preceding claims, **characterised by** that the measure of quality (Q) of an assumed target path $(Z(i, j))$ is calculated from the sum of the squares, in particular weighted squares, of differences of the bearing angle $(Best)$ assumed along the target path $(Z(i, j))$ and of the measured bearing angle $(B_{meas})$ assigned to the same measuring location.

5. Method according to one of claims 1 to 3, **characterised by** that the measure of quality $(Qinv)$ of an assumed target path $(Z(i, j))$ is calculated from the inverted sum of the squares, in particular weighted squares, of the differences $(B_{meas} - B_{est})$ of the bearing angle $(Best)$ assumed along the target path $(Z(i, j))$ and of the measured bearing angle $(B_{meas})$ assigned to the same measuring location and the differences are multiplied by the smallest of these sums of all assumed target paths $(Z(i, j))$.

6. Method according to one of the preceding claims, **characterised by** that a possible solution (15) is excluded if the assigned target path does not intersect all signal beams belonging to the measured bearing angles.

7. Method according to one of the preceding claims, **characterised by** that a possible solution is excluded if it lies outside one or more predetermined boundary conditions of known extreme values of the target parameters.

8. Method according to one of the preceding claims, **characterised by** that the degree of reliability is determined as "high" if all respective target parameters of the solutions with a measure of quality ($Q$, $Qinv$) indicating a minimum quality lie within a predetermined bandwidth around the mean value of the respective target parameter.

9. Method according to one of the preceding claims, **characterised by** that during each processing cycle the target parameters of all solutions with a measure of quality exceeding a minimum quality are represented graphically visualised on a display device (34) by means of one or more two-dimensional diagrams of the measure of quality ($Q$, $Qinv$) via

   a) the assumed target course ($C$) and/or
   b) the assumed target distance ($R$) and/or
   c) the assumed target speed ($V$).

10. Method according to one of the preceding claims, **characterised by** that during each processing cycle the target parameters of all solutions with a measure of quality exceeding a minimum quality are represented graphically visualised on a display device (34) by means of one or more three-dimensional diagrams of the measure of quality ($Q$, $Qinv$) via

    a) the assumed target course ($C$) and the assumed target distance ($R$) and/or
    b) the assumed target course ($C$) and the assumed target speed ($V$) and/or
    c) the assumed target distance ($R$) and the assumed target speed ($V$) and/or
    d) the assumed target distance ($R$), the assumed target course ($C$) and the assumed target speed ($V$).

11. Method according to one of the preceding claims, **characterised by** that during each processing cycle the target parameters of all solutions with a measure of quality exceeding a minimum quality are represented graphically visualised on a display device (34) at least by means of four two-dimensional diagrams of the measure of quality ($Q$, $Qinv$) and to be precise respectively via two target parameters ($C, R; C, V; R, V$), wherein the value of the measure of quality ($Q$, $Qinv$) is coded, in particular colour-coded according to a colour scale.

12. Method according to one of the preceding claims, **characterised by** that for each target parameter ($C, R, V$) an expectation area is calculated, for which the measure of quality ($Q$, $Qinv$) attains a minimum quality.

13. Method according to one of the preceding claims, **characterised by** that the solution with the highest-value measure of quality ($C, R, V$) is marked.

14. Method according to one of the preceding claims, **characterised by** that by means of several arrangements (24) of waterborne sound detectors, sound waves are received and thus bearing angles are measured to a target from different measuring locations and this plurality of bearing angles assigned to a target are used to estimate a target position in the manner of a cross bearing, wherein a possible solution space for the possible solutions of the target parameters to be determined is restricted by means of this estimate.

15. Method according to one of the preceding claims, **characterised by** that the frequencies of the incident sound waves from a measured bearing angle are measured and these measured frequencies are used to estimate a target position, wherein a possible solution space for the possible solutions of the target parameters to be determined is restricted by means of this estimate.

16. Device for the passive determination of target parameters by directionally selective receipt of sound waves, which are radiated or transmitted by a target, by means of an arrangement (24) of waterborne sound detectors of a sonar receiving system, in particular on a carrier vehicle, with a direction finder for measuring bearing angles ($B_{meas}$) per processing cycle and a TMA unit (38) for outputting an optimised solution for the target parameters (R, C, V), in that from estimated bearing angles, which are ascertained from estimated positions of the target, and measured bearing angles, this optimised solution is updated iteratively during each processing cycle of a series of consecutive processing cycles, and an arithmetic unit (26) for calculating a plurality of target paths ($Z(i, j)$) from possible solutions for the target parameters ($Rest, C_{es}t, V_{est}$) to be determined, namely an assumed target course ($C_{es}t$), an assumed target distance ($R_{est}$) and an assumed target speed ($Vest$), the device **characterised by** a reliability indicator unit (35) for ascertaining a reliability indicator ($ZI_R, ZI_C, ZI_V$) in each case from the distribution of the measure of quality (Q, Qinv) over each of the target parameters *(Rest, C$_{est}$, V$_{est}$)* to be determined along each assumed target path *(Z(i, j))* from related bearing angles *(Best)* ascertained from the assumed target parameters *(Rest, C$_{est}$, V$_{est}$)* and from measured bearing angles *(B$_{meas}$)*, a degree of reliability unit (36) for ascertaining a degree of reliability (ZG) from the reliability indicators (ZI$_R$, ZI$_C$, ZI$_V$) of the respective target parameters *(R$_{est}$, C$_{est}$, V$_{est}$)* and an evaluation unit (37) for determining the reliability of the optimised solution *(R, C, V)* by means of the degree of reliability (ZG), which can be output in addition to the optimised solution*(R, C, V)* by means of a numerical value and/or graphically via a display device.

## Revendications

1. Procédé de détermination passive de paramètres cibles par réception sélective en fonction de la direction d'ondes sonores qui sont émises ou envoyées par une cible, au moyen d'un arrangement (24) d'hydrophones d'une installation réceptrice sonar, en particulier sur un véhicule porteur, à partir d'angles de relèvement estimés, qui sont déterminés à partir de positions estimées de la cible, et à partir d'angles de relèvement mesurés au point de mesure par l'arrangement (24), dans lequel une différence d'angle de relèvement entre les angles de relèvement mesurés et estimés est minimisée par itération et lorsque le minimum est atteint, la position estimée livre les paramètres cibles d'une solution optimisée pour une sortie de la distance de la cible, de la position de la cible, du cap de la cible et de la vitesse de la cible, qui est mise à jour pendant chaque cycle de traitement d'une série de cycles de traitement successifs, dans lequel pendant chaque cycle de traitement, à partir de solutions possibles pour les paramètres cibles *(R$_{est}$, C$_{est}$, V$_{est}$)* à déterminer, à savoir un cap de la cible supposé *(C$_{est}$)*, une distance de la cible supposée *(R$_{est}$)* et une vitesse de la cible supposée *(V$_{est}$)*, une pluralité de trajectoires de cibles *(Z(i, j))* différentes est calculée, en ce que du point de mesure pour chacune de ces solutions possibles des angles de relèvement *(B$_{est}$)* correspondants sont supposés, en ce qu'avec les angles de relèvement supposés *(B$_{est}$)* une mesure de qualité (Q, Qinv) est calculée le long de chacune des trajectoires de cible estimées *(Z(i, j))* en prenant en compte l'angle de relèvement *(B$_{meas}$)* mesuré au point de mesure,
**caractérisé en ce que**, à partir de la distribution de la mesure de qualité (Q, Qinv) en fonction de chaque paramètre cible (R$_{est}$, C$_{est}$, V$_{est}$) à déterminer, respectivement un indicateur de fiabilité (ZI$_R$, ZI$_C$, ZI$_V$) est déterminé et un degré de fiabilité (ZG) est dérivé des indicateurs de fiabilité (ZI$_R$, ZI$_C$, ZI$_V$) des paramètres cibles (R$_{est}$, C$_{est}$, V$_{est}$) respectifs pour déterminer la fiabilité de la solution optimisée, qui est sorti au moyen d'une valeur numérique et/ou graphiquement via un dispositif d'affichage.

2. Procédé selon la revendication 1, **caractérisé en ce que** les trajectoires de cibles supposées (Z(i, j)) sont déterminées en tant que trajectoires de cibles à cap constant et vitesse constante, dans lequel une première ligne de relèvement (1 ; 10) correspondant à un premier angle de relèvement *(B$_{meas\ first}$)* mesuré au point de mesure de l'installation réceptrice sonar ainsi qu'une dernière ligne de relèvement (2 ; 14) correspondant à un angle de relèvement *(B$_{meas\ last}$)* mesuré en dernier au point de mesure de l'installation réceptrice sonar sont déterminées, dans lequel chaque trajectoire de cible *(Z(i, j))* supposée commence sur la première ligne de relèvement (1 ; 10) en un point de départ et se termine sur la dernière ligne de relèvement (2 ; 14) en un point final, **en ce que** les points de départ des trajectoires de cible sur la première ligne de relèvement ainsi que les points finaux des trajectoires de cible *(Z(i, j))* commençant au même point de départ sur la dernière ligne de relèvement (2 ; 14) sont disposés à des distances différentes du point de mesure correspondant, **en ce que** des positions de cibles sont supposées le long des trajectoires de cible supposées en fonction de la vitesse de cible supposée et forment des lignes de relèvement supposées par rapport aux points de mesure et à partir de cela, des angles de relèvement supposés *(B$_{est}$)* sont déterminés.

3. Procédé selon la revendication 2, **caractérisé en ce que** la première (1 ; 10) et/ou la dernière (2 ; 14) ligne de relèvement est variable.

4. Procédé selon l'une des revendications précédentes, **caractérisé en ce que** la mesure de qualité (Q) d'une trajectoire de cible *(Z(i, j))* supposée est calculée à partir de la somme des carrés, en particulier pondérés, de différences entre l'angle de relèvement supposé *(B$_{est}$)* le long de la trajectoire de cible *(Z(i, j))* et l'angle de relèvement mesuré *(B$_{meas}$)* associé au même point de mesure.

5. Procédé selon l'une des revendications 1 à 3, **caractérisé en ce que** la mesure de qualité *(Qinv)* d'une trajectoire de cible *(Z(i, j))* supposée est calculée à partir de la somme inversée des carrés, en particulier pondérés, des différences *(B$_{meas}$ - B$_{est}$)* entre l'angle de relèvement supposé *(B$_{est}$)* le long de la trajectoire de cible (Z(i, j)) et l'angle de relèvement mesuré *(B$_{meas}$)* associé au même point de mesure et les différences sont multipliées par la plus faible de ces sommes de toutes les trajectoires de cible ($Z(i, j)$) supposées.

6. Procédé selon l'une des revendications précédentes, **caractérisé en ce qu'**une solution possible (15) est exclue quand la trajectoire de cible associée ne coupe pas toutes les lignes de relèvement appartenant aux angles de relèvement mesurés.

7. Procédé selon l'une des revendications précédentes, **caractérisé en ce qu'**une solution possible est exclue quand elle est hors d'une ou de plusieurs condition(s) secondaire(s) spécifiée(s) de valeurs extrêmes connues des paramètres cibles.

8. Procédé selon l'une des revendications précédentes, **caractérisé en ce que** le degré de fiabilité est déterminé comme étant "élevé" quand tous les paramètres cibles respectifs des solutions avec une mesure de qualité ($Q$, $Qinv$) indiquant une qualité minimale sont situés dans une gamme prédéfinie autour de la valeur moyenne du paramètre cible respectif.

9. Procédé selon l'une des revendications précédentes, **caractérisé en ce que** pendant chaque cycle de traitement les paramètres cibles de toutes les solutions avec une mesure de qualité dépassant une qualité minimale sont représentés au moyen d'un ou de plusieurs diagramme(s) bidimensionnel(s) de la mesure de qualité ($Q$, $Qinv$) en fonction

    a) du cap de la cible ($C$) supposé et/ou
    b) de la distance de la cible ($R$) supposée et/ou
    c) de la vitesse de la cible ($V$) supposée

visualisés graphiquement sur un dispositif d'affichage (34).

10. Procédé selon l'une des revendications précédentes, **caractérisé en ce que** pendant chaque cycle de traitement les paramètres cibles de toutes les solutions avec une mesure de qualité dépassant une qualité minimale sont représentés au moyen d'un ou de plusieurs diagramme(s) tridimensionnel(s) de la mesure de qualité ($Q$, $Qinv$) en fonction

    a) du cap de la cible ($C$) supposé et de la distance de la cible ($R$) supposée et/ou
    b) du cap de la cible ($C$) supposé et de la vitesse de la cible ($V$) supposée et/ou
    c) de la distance de la cible ($R$) supposée et de la vitesse de la cible ($V$) supposée et/ou
    d) de la distance de la cible ($R$) supposée, du cap de la cible ($C$) supposé et de la vitesse de la cible ($V$) supposée

visualisés graphiquement sur un dispositif d'affichage (34).

11. Procédé selon l'une des revendications précédentes, **caractérisé en ce que** pendant chaque cycle de traitement les paramètres cibles de toutes les solutions avec une mesure de qualité dépassant une qualité minimale sont représentés au moins au moyen de quatre diagrammes bidimensionnels de la mesure de qualité ($Q$, $Qinv$), à savoir respectivement en fonction de deux paramètres cibles ($C, R; C, V; R, V;$) visualisés graphiquement sur un dispositif d'affichage (34), la valeur de la mesure de qualité ($Q$, $Qinv$) étant codée, en particulier en couleur selon une échelle de couleurs.

12. Procédé selon l'une des revendications précédentes, **caractérisé en ce que** pour chaque paramètre cible ($C, R, V$) une zone d'attente est calculée, pour laquelle la mesure de qualité ($Q$, $Qinv$) atteint une qualité minimale.

13. Procédé selon l'une des revendications précédentes, **caractérisé en ce que** la solution avec la mesure de qualité ($C, R, V$) la plus élevée est marquée.

14. Procédé selon l'une des revendications précédentes, **caractérisé en ce qu'**au moyen de plusieurs arrangements (24) d'hydrophones des ondes sonores sont reçues et ainsi des angles de relèvement vers une cible sont mesurés depuis différents points de mesure et cette pluralité d'angles de relèvement associés à une cible est utilisée pour l'estimation d'une position de cible à la manière d'un relèvement croisé, dans lequel au moyen de cette estimation un espace de solution possible pour les solutions possibles des paramètres cibles à déterminer est limité.

15. Procédé selon l'une des revendications précédentes, **caractérisé en ce que** les fréquences des ondes sonores incidentes depuis un angle de relèvement mesuré sont mesurées et ces fréquences mesurées sont utilisées pour l'estimation d'une position de cible, dans lequel au moyen de cette estimation un espace de solution possible pour les solutions possibles des paramètres cibles à déterminer est limité.

16. Dispositif de détermination passive de paramètres cibles par réception sélective en fonction de la direction d'ondes sonores qui sont émises ou envoyées par une cible, au moyen d'un arrangement (24) d'hydrophones d'une installation réceptrice sonar, en particulier sur un véhicule porteur, avec une installation de relèvement pour mesurer des angles de relèvement $(B_{meas})$ à chaque cycle de traitement et une unité de TMA (38) pour sortir une solution optimisée pour les paramètres cibles (R, C, V), en ce qu'à partir d'angles de relèvement estimés, qui sont déterminés à partir de positions estimées de la cible, et d'angles de relèvement mesurés cette solution optimisée est mise à jour par itération pendant chaque cycle de traitement d'une série de cycles de traitement successifs et une unité de calcul (26) pour calculer une pluralité de trajectoires de cible (Z(i, j)) à partir de solutions possibles pour les paramètres cibles $(R_{est}, C_{est}, V_{est})$ à déterminer, à savoir un cap de la cible supposé $(C_{est})$, une distance de la cible supposée $(R_{est})$ et une vitesse de la cible supposée $(V_{est})$,

le dispositif étant **caractérisé par** une unité d'indicateur de fiabilité (35) pour déterminer respectivement un indicateur de fiabilité $(ZI_R, ZI_C, ZI_V)$ à partir de la distribution de la mesure de qualité $(Q, Qinv)$ en fonction de chaque paramètre cible $(R_{est}, C_{est}, V_{est})$ à déterminer le long de chaque trajectoire de cible $(Z(i, j))$ supposée à partir d'angles de relèvement $(B_{est})$ correspondants déterminés à partir des paramètres cibles supposés $(R_{est}, C_{est}, V_{est})$ et à partir d'angles de relèvement mesurés $(B_{meas})$, une unité de degré de fiabilité (36) pour déterminer un degré de fiabilité (ZG) à partir des indicateurs de fiabilité $(ZI_R, ZI_C, ZI_V)$ des paramètres cibles $(R_{est}, C_{est}, V_{est})$ respectifs et une unité d'évaluation (37) pour déterminer la fiabilité de la solution optimisée (R, C, V) au moyen du degré de fiabilité (ZG) qui peut être sorti en plus de la solution optimisée (R, C, V) au moyen d'une valeur numérique et/ou graphiquement via un dispositif d'affichage.

Fig. 1

Fig. 2

Fig. 3

Fig. 4

Fig. 5

Fig. 6

Fig. 7

Fig. 8

Fig. 9

Fig. 10

EP 2 294 442 B1

Fig. 11

Fig. 12

Fig. 13

Fig. 14

Fig. 15

Fig. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3446658 C2
- DE 10129726 A1
- EP 1531339 A2
- WO 2007113485 A1

**In der Beschreibung aufgeführte Nicht-Patentliteratur**

- Linear Least Squares with linear inequality constraints. **CHARLES R. LAWSON ; RICHARD J. HANSEN.** Applied Mathematics. 1995, 158-173